# EUROPEAN PATENT SPECIFICATION

(11) **EP 0 450 032 B1**
(45) Date of publication and mention of the grant of the patent: **17.12.1997**
(21) Application number: 90915591.3
(22) Date of filing: 04.10.1990
(51) Int. Cl.: G06K 17/00, G06K 7/10

(54) **ELECTRONIC IMAGE LIFT**
ELEKTRONISCHE BILDERFASSUNG
SAISIE ELECTRONIQUE D'IMAGES

(30) Priority: 10.10.1989 US 419044; 10.10.1989 US 419045; 10.10.1989 US 419355; 10.10.1989 US 419560; 10.10.1989 US 419572; 10.10.1989 US 419574
(43) Date of publication of application: 09.10.1991
(73) Proprietor: UNISYS CORPORATION, Blue Bell, PA 19424 (US)
(72) Inventor: COPENHAVER, Gary, Canton, MI 48187 (US); BAKKER, Johan, Union Lake, MI 48085 (US); VALA, John, Plymouth, MI 48170 (US); CONCANNON, David, Farmington Hills, MI 48331 (US); CATCHPOLE, Clive, Birmingham, MI 48010 (US); BANKS, Gerald, Ann Arbor, MI 48108 (US)
(74) Representative: Eisenführ, Speiser & Partner
(86) International application number: US9005673
(87) International publication number: WO9106070

(56) References cited:
- US-A- 3 936 167
- US-A- 4 205 780
- US-A- 4 352 022
- US-A- 4 510 619
- US-A- 4 821 332
- PATENT ABSTRACTS OF JAPAN vol. 11, no. 177 (P-583) 06 June 1987, & JP-A-62 006235 (CANON INC.) 13 January 1987, see the whole document
- PATENT ABSTRACTS OF JAPAN vol. 8, no. 233 (P-309) 26 October 1984, & JP-A-59 111143 (MATSUSHITA DENKI SANGYO K.K.) 27 June 1984, see the whole document

## Description

### Field of the Invention:

This invention relates to automatic, high-speed document processing, and more particularly to associated image capturing operations whereby an electronic image of a document is made and stored.

### Background of the Invention:

Automatic, high-speed document processing systems are well known in the art --e.g. financial document processors for bank checks and remittance documents. Many difficulties and disadvantages of present system relate to how well the paper documents tolerate processing and handling. Since the documents are apt to be lost or damaged by processing equipment and/or personnel, the result is apt to be errors in reconciling and balancing document transactions and in reporting to customers (e.g. monthly statement).

Workers recognize that electronically-stored data ("electronic images") can be processed much quicker, more reliably and less subject to error. But to do so, one must first capture an accurate image, or modified image, of the physical document and convert this into electronic computer (EDP) signals. The EDP image-signals can then be manipulated (e.g. be reproduced for visual review, be sorted and distributed, etc. ) much more rapidly, easily and reliably than physical documents.

Current systems contemplated for "electronic image-lift" teach using a video camera by which an operator views the front and back of the actual document as desired. Based on what he sees, the operator can electronically enter document-data into a computer sytem; e.g., such things as check-amount, account number and other data necessary for processing document transactions. Such physical viewing is labor-intensive, is subject to error (e.g. from operator fatigue) and is substantially slower than an automated image-capture arrangement.

Workers are beginning to think of using imaging technology as a way of improving document processing, as disclosed, for example, in US-A-4,205,780, 4,264,808, and 4,672,186. Generally, imaging involves optically scanning documents to produce electronic images that are processed electronically and stored on high capacity storage media (such as magnetic disc drives and/or optical memory) for later retrieval and display. It is apparent that document imaging can provide an opportunity to reduce document handling and movement, since the electronic images can be used in place of the actual documents.

US-A-4 510 619 representing the closest prior art from which the invention proceeds, discloses a document processing system wherein the documents are to be transported at high speed along a prescribed transport path past a pair of offset image capturing sites. Belts form transport means for continuously transporting documents past the sites at high speed, and without any pause. Two illumination sources are provided as energy-source means for directing light beams at both sites in parallel. Further, there are provided two video cameras which capture images of the front and rear of the document as it is transported by the belts. The illumination sources each comprise a focus assembly which forms means for conveying the light energy between the sources and the sites. Further, the illumination sources comprise two tungsten halogen bulbs which are encased in a housing having cooling means for removing the heat resulting from the light energy of the illumination sources.

It would be somewhat conventional to think of document processing with "image capture" using video cameras, with two light sources, one to illuminate each side of a document, plus various lenses to focus light onto the document. Successive document-images ("image slices") can be reflected from the document, front and back, into respective video cameras. These can convert the optical image into electronic signals, which can then be converted by appropriate circuitry into digital form. But the foregoing would have serious disadvantages; e.g. it would require two light sources and two camera systems --- something expensive to provide and cumbersome to coordinate.

This invention addresses such disadvantages, e.g. teaching use of a single, high-intensity, well-cooled light source (cf. high-output xenon bulb, requiring substantially less power than a two-lamp system), and mounting the light source and associated optical components on a single base, and under a document transfer track, for ready access (e.g. for maintenance) and for better thermal isolation. Also, the taught system is modular (e.g. to plug-in to a relatively conventional sorter); it simplifies service and manufacture using interchangeable, easily-installed components, The system disclosed uses randomly-distributed fiber optics and electronic image conversion means in a high speed, automated image capturing system; e.g. one capable of accommodating the present advanced needs of financial institutions for document processing.

An object hereof is to address at least some of the foregoing problems and to provide at least some of the mentioned, and other, advantages.

### Summary of the Invention:

In order to achieve the above object, according to the present invention, there is provided a document processing system wherein documents are to be transported at high speed along a prescribed transport path past a pair of offset image capturing sites, this system comprising transport means for continuously transporting documents past said sites at high speed, and without pause; energy-source means for emitting a beam of light-energy and for directing the light-energy at both said sites, in parallel; energy-conveying means between said energy-source and the sites; two image capturing means, one disposed at each of said sites, each acting to capture an image of said documents; and heat-dissipation means disposed operatively adjacent said energy-source means and acting to extract light energy therefrom and dissipate it so as to shield the said sites and said conveying means from adverse light effects, characterized in that the heat-dissipation means includes means for extracting at least a substantial part of the infra-red (IR) component of the beam of light-energy emitted by said energy-source means, and an IR dissipation-dump means adapted to receive the IR component from said extracting means and to convert it to heat.

Further advantageous embodiments are defined in the dependent claims.

### Brief Description of the Drawings:

These and other features and advantages of the present invention will be appreciated by workers as they become better understood by reference to the following detailed description of the present preferred embodiments which should be considered in conjunction with the accompanying drawings, wherein like reference symbols denote like elements:
Fig. 1 is a perspective schematic idealized configuration of an entire Document Handling System DH apt for using our invention,
Fig. 2 is an idealized perspective of a Document Processor portion of this system DH; with Fig. 3 showing portions thereof in side view and very schematically; and Figs. 4, 5 showing in partial-perspective certain submodules thereof;
Fig. 6 is a block diagram showing functional units of this Document Processor; while Fig. 7 diagrams image-signal flow therein; and Fig. 8 is a block diagram in the fashion of Fig. 1, showing a number of such Document Processors;
Fig. 9 is an upper perspective view of a portion of an Image-Station embodiment, with a different view in Fig. 9A and with portions thereof schematically indicated in the plan view of Fig. 10 and the illumination-optics portion thereof very schematically (functionally) indicated in Fig. 11;
Fig. 12 is a diagram indicating functionally, a preferred construction of a Fibre Optic bundle portion of this embodiment, while Figs. 13, 13A are upper perspective views (front and back) of such a bundle, Fig. 14 is a schematized front view of an input face of such a bundle, Fig. 14A gives specifications for such a bundle, and Fig. 15 is a diagram in the fashion of Fig. 12 indicating testing of such a bundle;
Fig. 16 is a schematic functional diagram of the imaging-optics portion of this embodiment; related imaging optics;
Fig. 17 is a partial, side-section of the illumination-optics of the embodiment; while Fig. 18 is an exploded diagram of the lamp-housing sub-section thereof; and Fig. 20 is a similar functional diagram of some of this illumination-optics;
Fig. 19 is a similar functional diagram of how some the imaging-mirrors of the embodiment are packaged; while Fig. 19A is a section of a portion of the Trunnion mirror assembly thereof;
Fig. 21 is a side-section of an Energy-Dump portion of this embodiment, with an upper portion thereof shown in Fig. 22, a plan view of some "vanes" thereof shown in Fig. 23 (and front-view in Fig. 24), while Fig. 25 shows the lamp assembly thereof in partial elevation;
Fig. 26 is a partial side view of some illumination optics; while Fig. 26A is an enlarged detail thereof;
Fig. 27 is an exploded perspective of a mount casting for elements of the embodiment (with elements thereon exploded-away); while Figs. 28, 29 are side sections of this casting; and Figs. 27A, 27B, 27C show the casting installed in a Processor;
Fig. 30 is a schematic plan view of such imaging-optics; while Figs. 32, 33 show these elements, selectively and in side-section; and Fig. 31 shows the elements in a functional diagram;
Fig. 34 is a plot of lamp intensity vs wavelength, while Fig. 34A plots spectral response of the embodiment camera elements with that of the typical human eye; and
Fig. 35 is a plan view of Front and Rear illumination optics, showing the light-paths; and Fig. 36 is a like showing of part of the Fig. 35 assembly.

### Description of Preferred Embodiment:

### --- Exemplary use

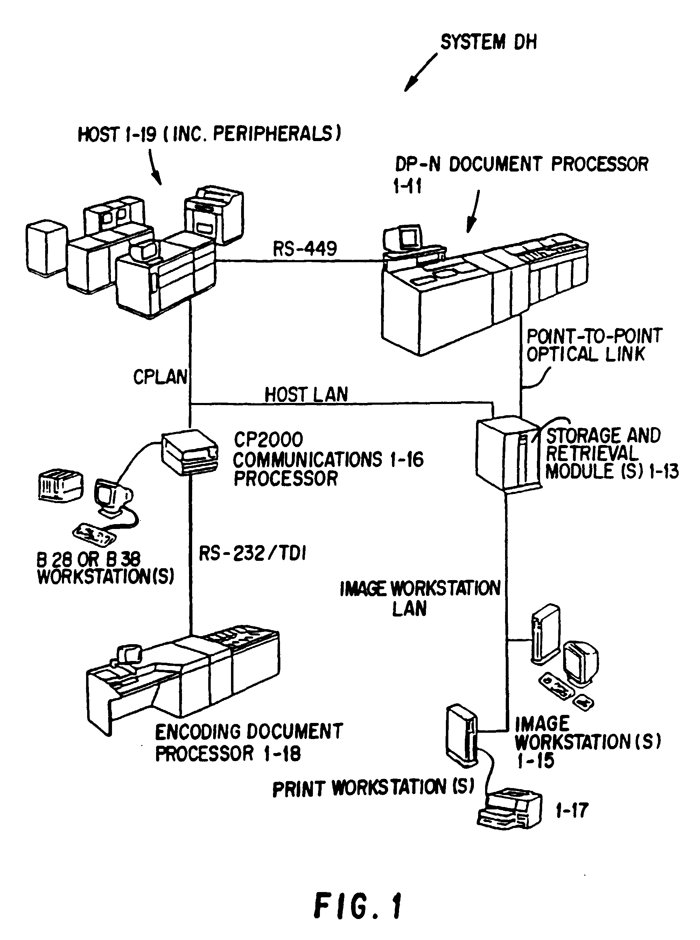

Before giving more details of the image capturing embodiment, it will help to indicate an examplary use-environment in which such an embodiment can be employed. Such is the document handling arrangement we show in Figs. 1-8 (called "System DH"). System DH will now be very briefly summarized. The methods and means discussed herein, will generally be understood as constructed and operating as presently known in the art, except where otherwise specified; likewise all materials, methods, devices and apparatus described herein will be understood as implemented by known expedients according to present good practice.

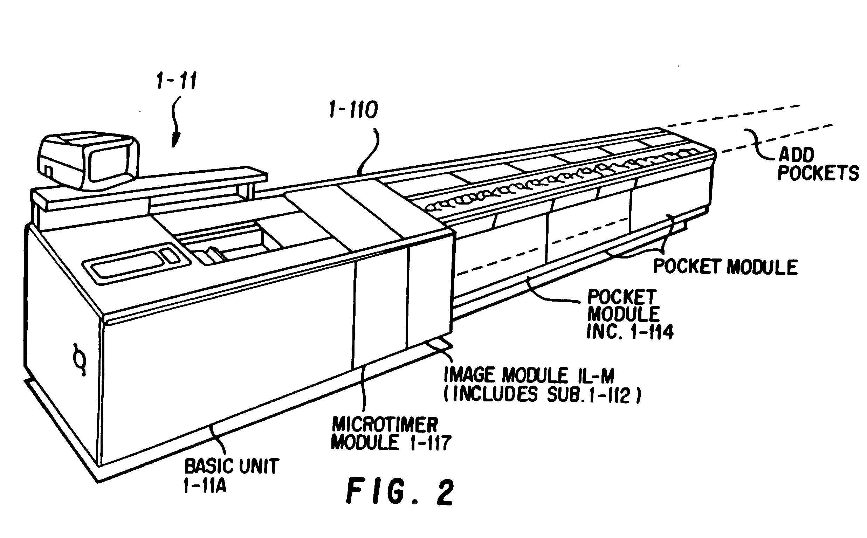

In Fig. 1, System DH may be seen to comprise a Document Processor 1-11 (also called DP-N) coupled to a Host Computer system 1-19 and one or more Storage/Retrieval modules (SRM) 1-13. Workers will understand that documents (e.g. checks etc.) are to be fed into Processor 1-11 and rapidly transported thereby past various processing-stations (e.g. microfilm and imager as described below) to wind-up in one of several sort-pockets (see Figs. 2-8). An "Electronic-image" of each document is "lifted" (captured) and sent to a designated SRM 1-13 for storage (e.g. on disks, as known in the art). The SRM(s) communicate with Host 1-19 and with various Workstations (e.g. one or more Image Workstations 1-15; a Print Workstation 1-17). System DH also includes an Encoder 1-18 (e.g. to imprint MICR characters on checks) and related communications and workstation units.

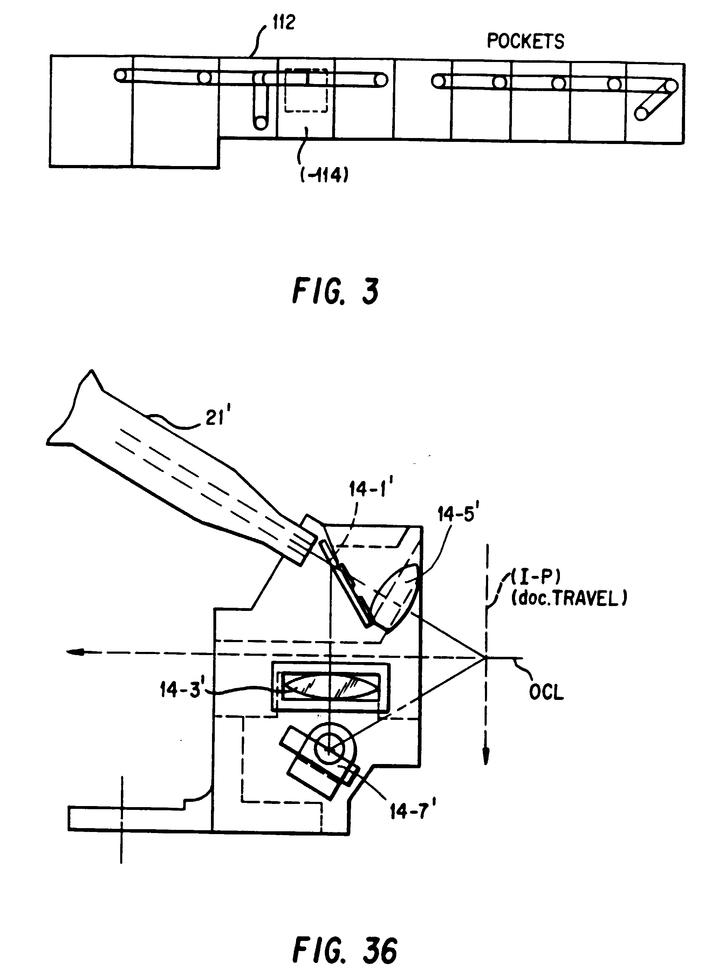

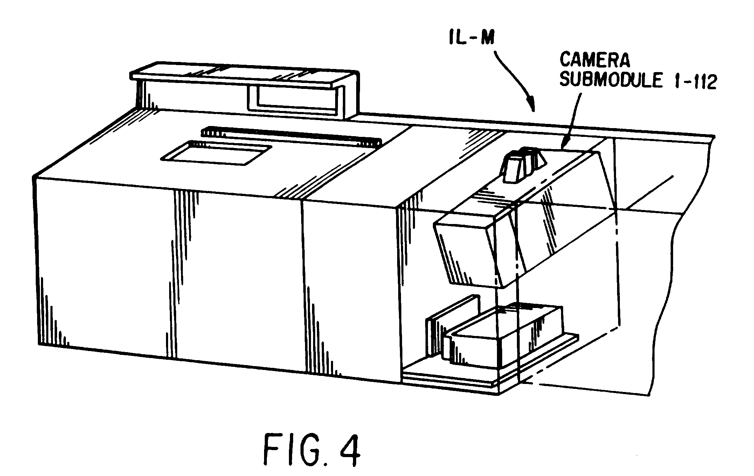

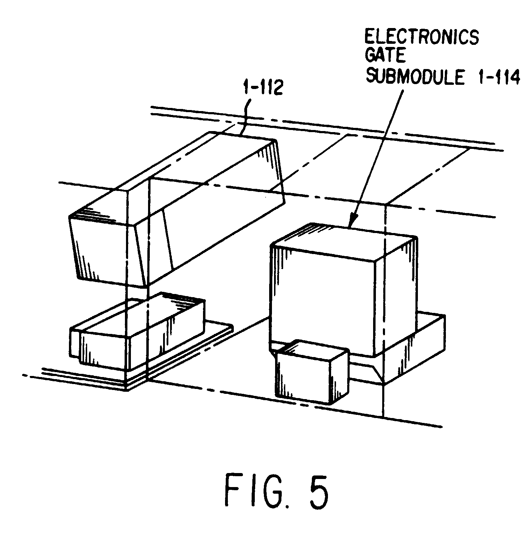

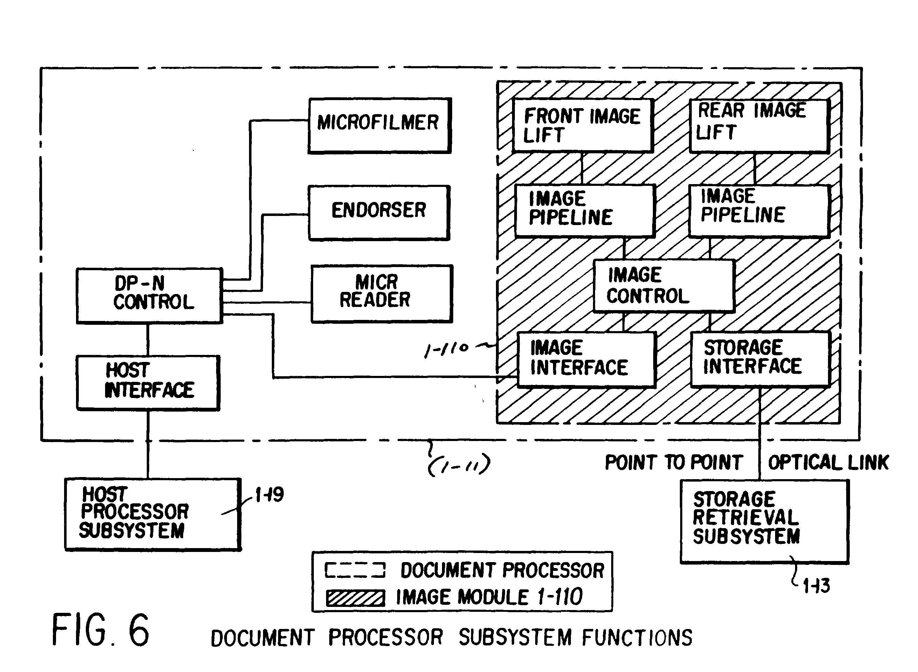

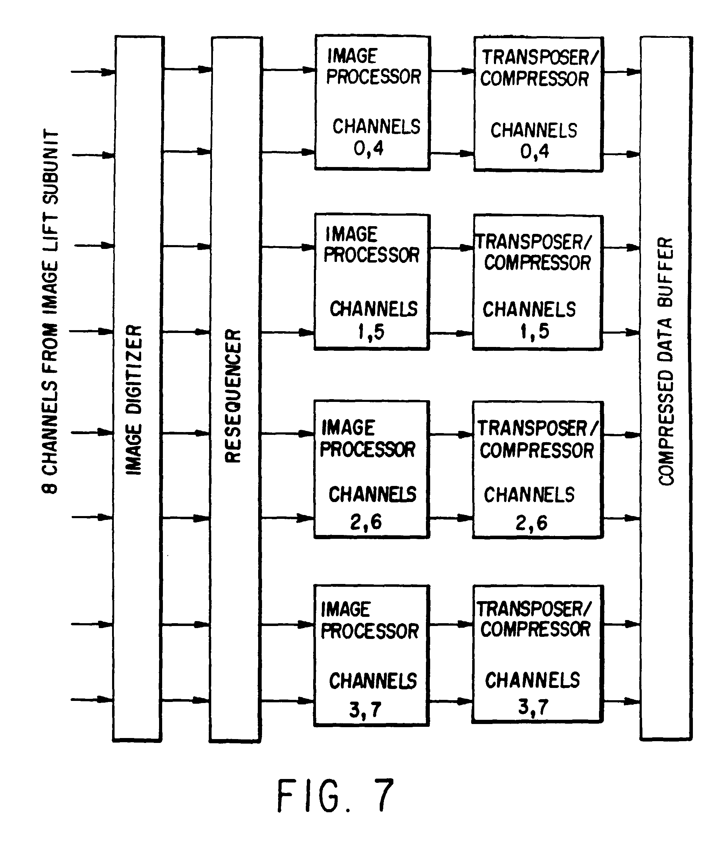

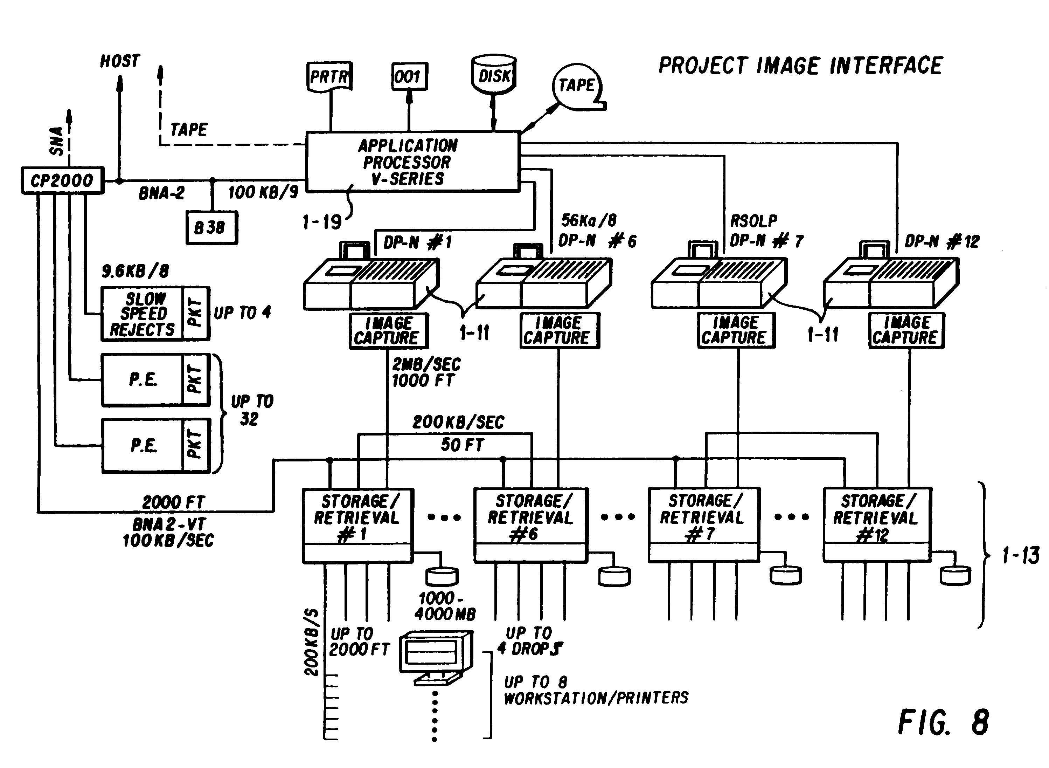

Fig. 2 indicates sub-units (modules) of Sort/Processor 1-11, including an image-lift camera module 1-112 and associated electronics submodule 1-114 (see Figs. 4, 5). Fig. 3 indicates this in schematic side-view. Fig. 6 very schematically (block-diagrammatically) indicates imaging and other functional units; while Fig. 7 schematically indicates how some image-lift signals are processed. Fig. 8 indicates, schematically, the possible use of a number of Sort-Processors 1-11 and Storage Modules 1-13.

Document images are to be captured at the real-time sorting speed of the docuunent processor. For high-speed document processors, the sorting speed is at least 1800 documents per minute (300 inches a second track speed); lower speed document processors sort documents at approximately 1000 (or less) documents a minute (e.g. 150 inches a second, track speed). Acquiring electronic representations of documents traveling at these speeds is a real challenge and requires specialized hardware and software.

Now, we will briefly outline how a preferred embodiment works; and thereafter take-up various sub-units thereof in more detail.

### Embodiment A, in general:

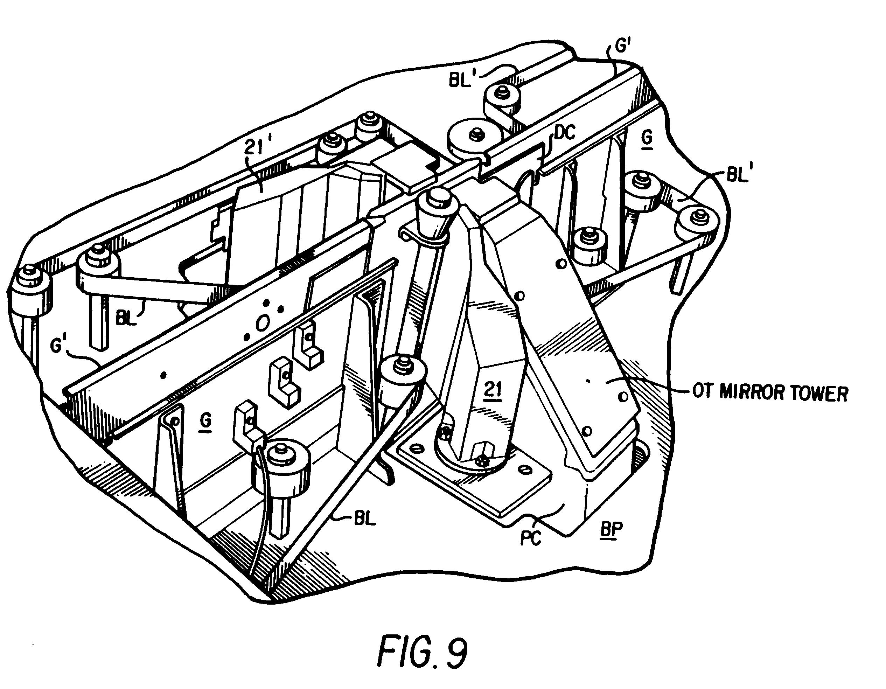

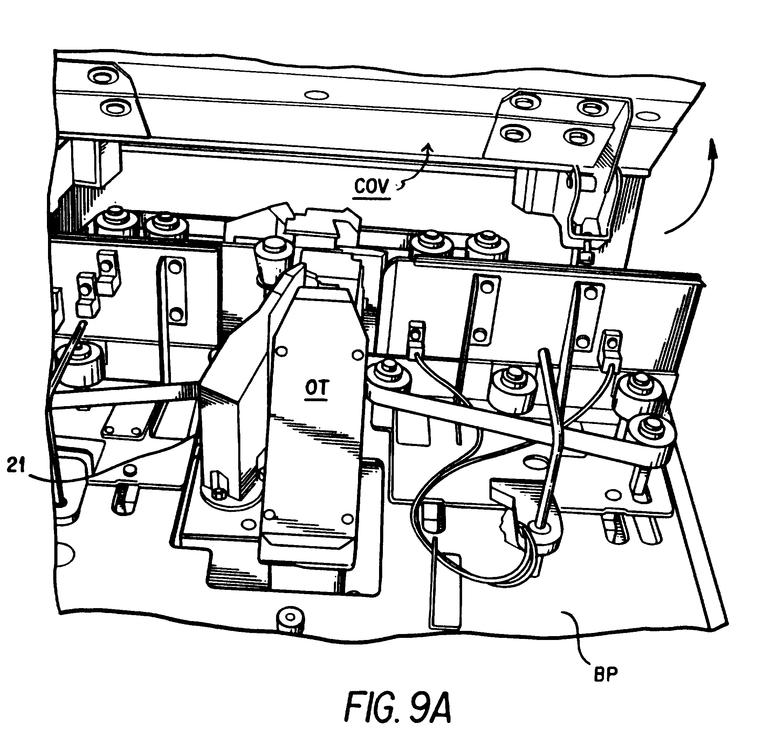

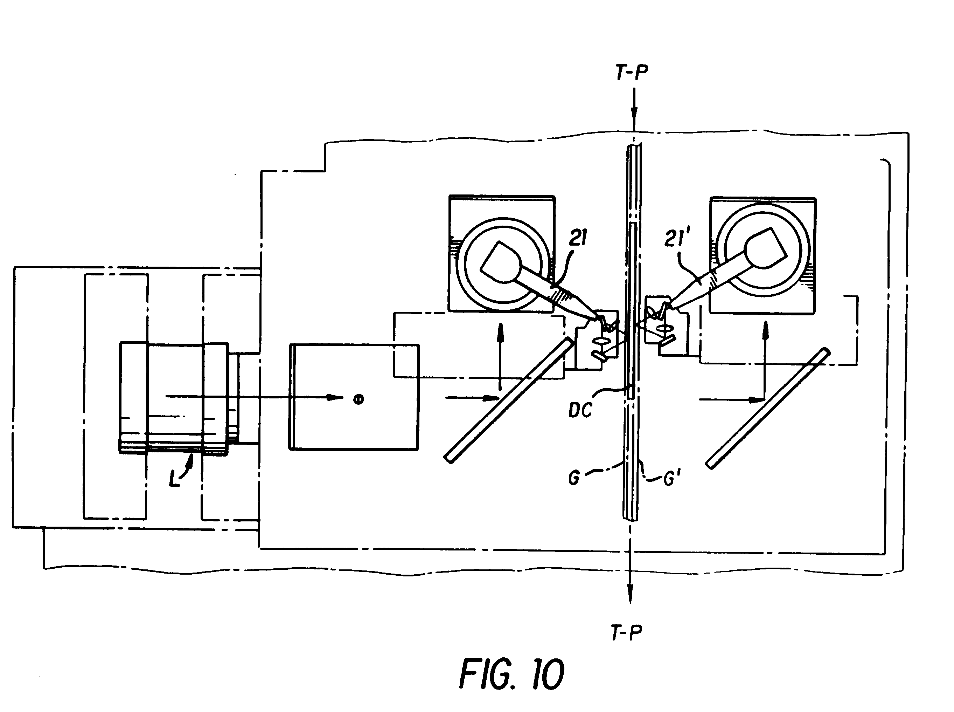

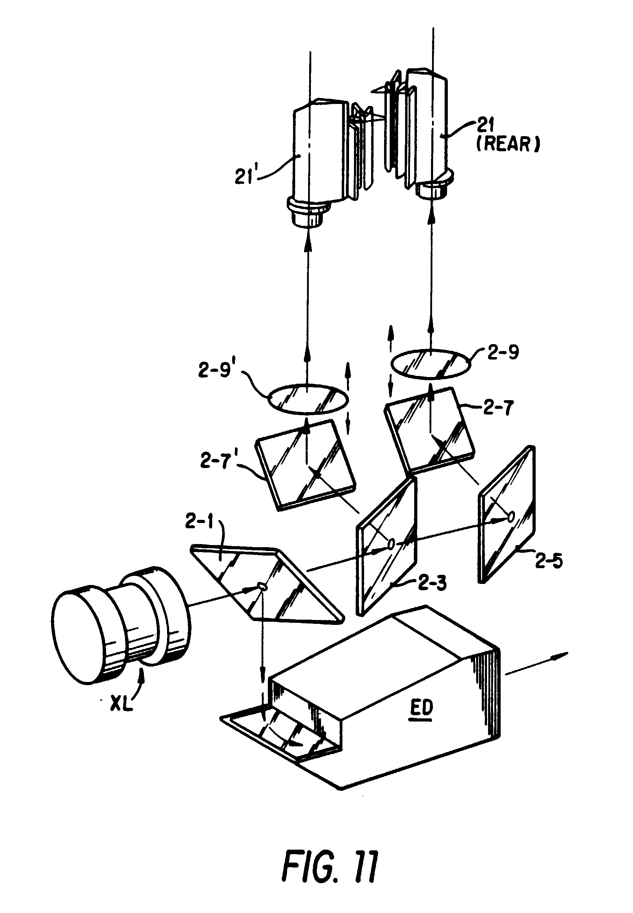

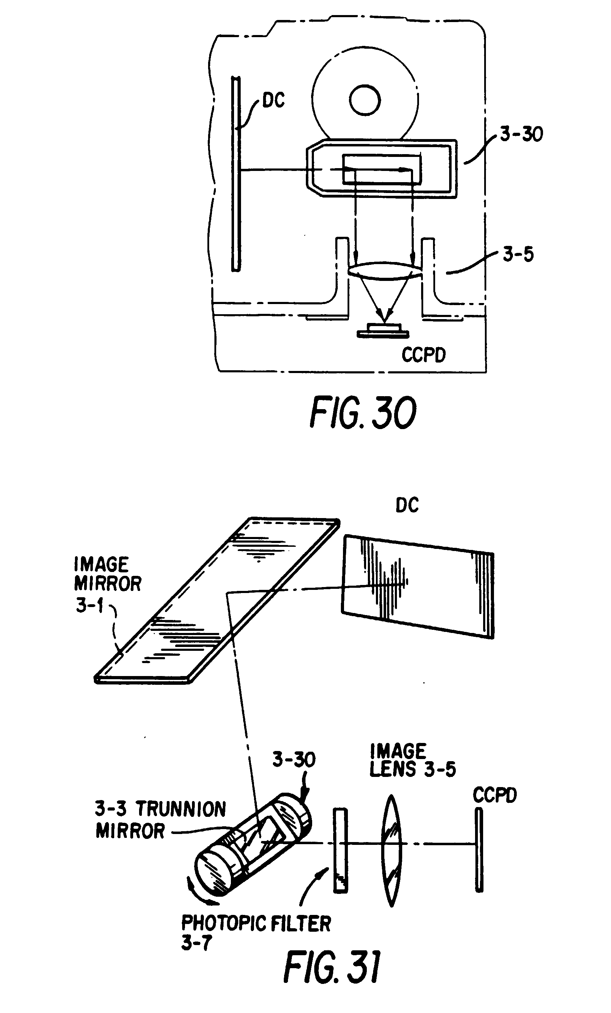

In general, it will be seen that our preferred "image-lift" arrangement is adapted to be incorporated, as a module IL-M, into a high-speed document processor, such as Sort Processor 1-11 (see Figs, 3, 4, 5 and associated description). Here, the image capturing is performed just upstream of the sort-pockets (e.g. see Fig. 4, camera 1-112 in Module IL-M). Figs. 9, 10 show a portion of the document transport means for Module IL-M (belts BL, BL' cooperate with track-defining guides G, G', between which a document DC is driven past the Front/Rear illumination/imaging stations). For example, see simplified Figs. 11, 31 for a functional showing of an illumination-patch, and an imaging-path, respectively; and also see Fig. 10 where each such "imaging station" may be understood, generally, as sited where the two illumination beams, from illumination-fibre bundles 21, 21', intersect.

The document transport in module IL-M is adapted to move documents past front/rear like slits (SL-F/SL-R), or image windows -; these being offset from one another along the transport path T-P (again see Fig. 10 and note how the Front and Rear dual-beams intersect path T-P at two different points). Associated, respective Front/Rear imaging-paths capture an image of a document's respective front and rear faces. The document transport system of module IL-M is adapted to translate documents, non-stop, past these slits SL at 300 ips (inches per second). Thus, at the respective points of "image-capture", the opposing track walls G, G' are broken by the cited illumination/readback slits SL. Each slit SL is filled with glare-resistant glass to thus keep documents from bending into it, or being snagged thereby [also see front view in Fig. 9A].

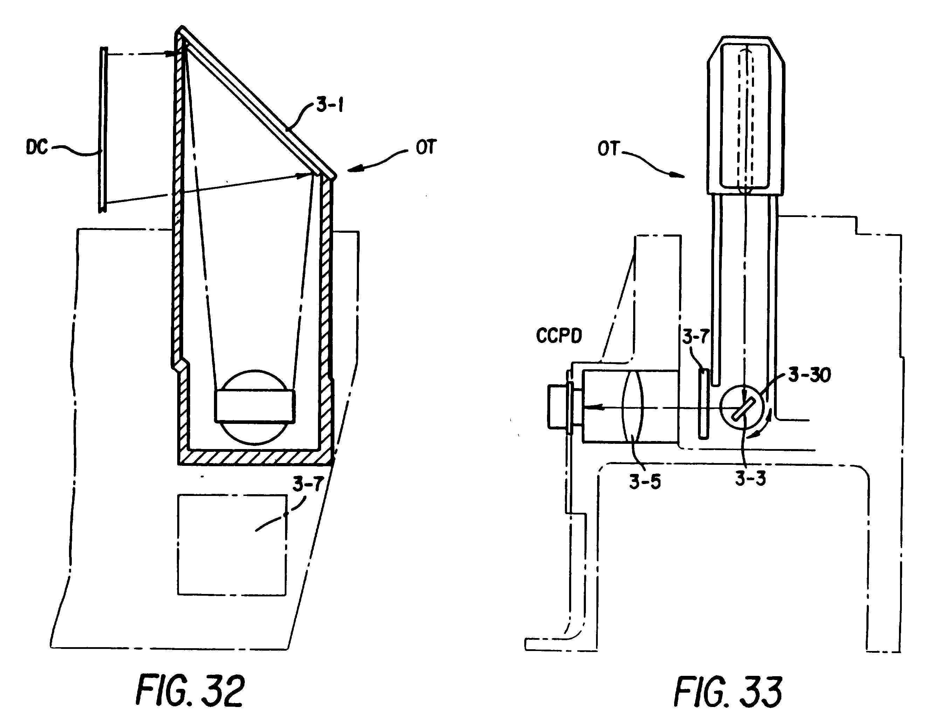

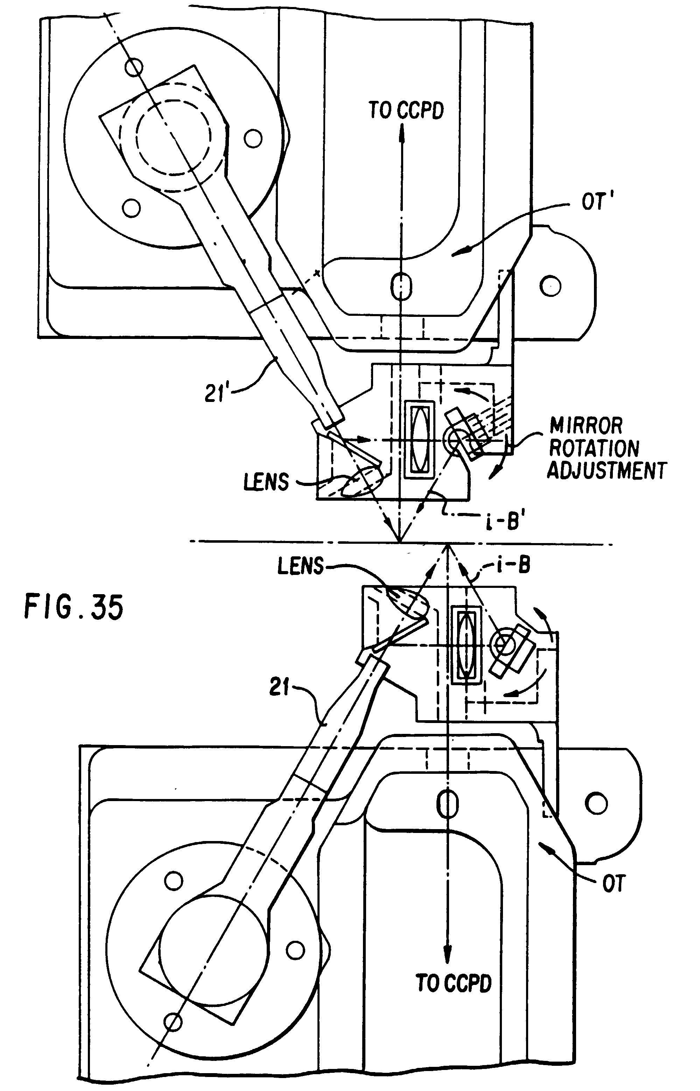

The documents are translated along this prescribed transport path T-P so the front and rear images may be captured, in focus (Fig. 35). The system uses a pair of linear-array CCPDs (charge-coupled photo-diodes, e.g. see Fig. 33) as camera means.

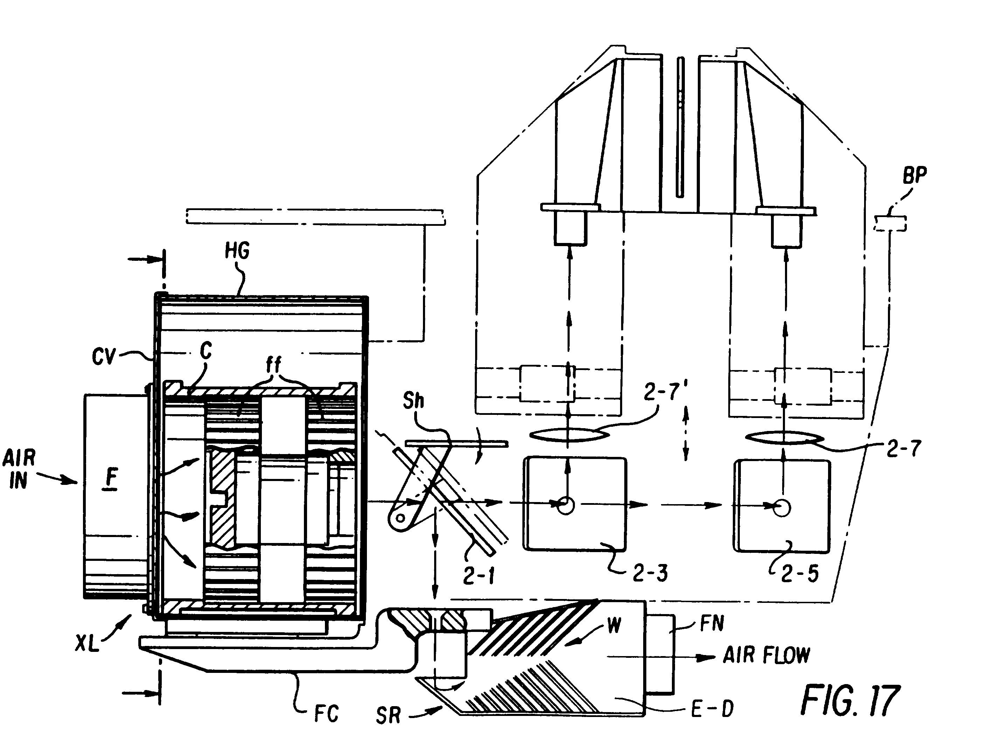

The illumination source (see Fig. 11) is preferably a single, high-output, high-intensity xenon lamp X-L (e.g. 1000 watts), encased in a heat sink H-S (e.g. see Figs. 11, 17) and fan-cooled. Its beam is filtered by a "hot mirror"/"energy-dump" combination 2-1/E-D (this mirror, or infrared-reflector, 2-1 diverts the IR component to a special heat-dump E-D). Then, the rest of the beam goes to a beam splitter 2-3, which passes half the illumination to a Corner mirror 2-5 and reflects half to an illumination mirror 2-7'. Mirror 2-5 reflects its beam to a like illumination mirror 2-7, which, in turn, diverts its beam (this will illuminate the document Rear) through an illumination lens 2-9, onto an associated "Rear fiber-optic bundle" 21. The fibers of bundle 21 convert the circular input-beam to an elongate rectangular output-beam (light bar). This "light bar" is projected (focused) through an associated Rear slit in Track guide G and onto the Rear side of each passing document.

The half of the light beam which Splitter 2-3 reflects to mirror 2-7' will illuminate the Front of documents; this beam is focused through an associated illumination lens 2-9' onto a second "Front fiber-optic bundle" 21' (like bundle 21). Bundle 21' projects a similar "light bar" through its associated Front slit SL-F onto the Front side of passing documents.

Thus, the output of each fiber-optic bundle 21, 21' is a narrow, rectangular high-intensity beam of light -- thus yielding opposed, offset illumination beams onto offset Front/Rear slits SL-F, SL-R and onto the Front and Rear of a passing document (see Figs. 10, 35; note beams from fiber-optic units 21, 21').

Each beam from fibre bundles 21, 21' is, however, further divided (see Figs. 10, 35, 36) using beam-splitters and associated optics to produce a "dual-symmetrical-oblique" illumination beam on each side of the document (as opposed to a more conventional single beam). We have found that such a pair of symmetrical, oblique beams (e.g. ±30° from the Normal is preferred) will reduce or eliminate distortion, shadowing etc. of the captured image that results from such things as creases and folds in a document --- something very important with financial documents whose surfaces can vary widely and can present imperfections and folds which distort or degrade the image (taken by a CCPD). Each set of dual-beams is focused onto a respective image slit SL to optimize illumination of its respective document-side and thus enhance image-capture.

The two illumination-beams are, therefore reflected form a respective face of a passing document to yield a pair of (Front, Rear) "image-beams", each being conducted to respective "CCPD camera" (CCPD, CCPD', see Figs. 30, 32, 33). Each of these rectangular images will be understood as emanating from the "document-slice" its slit produces, being taken along the "normal" to the document-face. One of two like image-beams is now described. The image-beam is sent to an "image-mirror" 3-1 (Fig. 31), arranged and disposed to divert the beam downward (see Fig. 32) to strike a rotatable Trunnion mirror 3-3. Mirror 3-3 is mounted on a rotating semi-cylindrical Trunnion 3-30, and diverts the beam through a special "photopic filter" 3-7, then to an image lens 3-5 which focuses it onto the respective CCPD surface. The CCPD converts the image into an electrical analog signal which is sent to data processor means for conversion to digital pulses (as known in this art).

Some critical fcators of the foregoing illumination/imaging arrangement are the following:

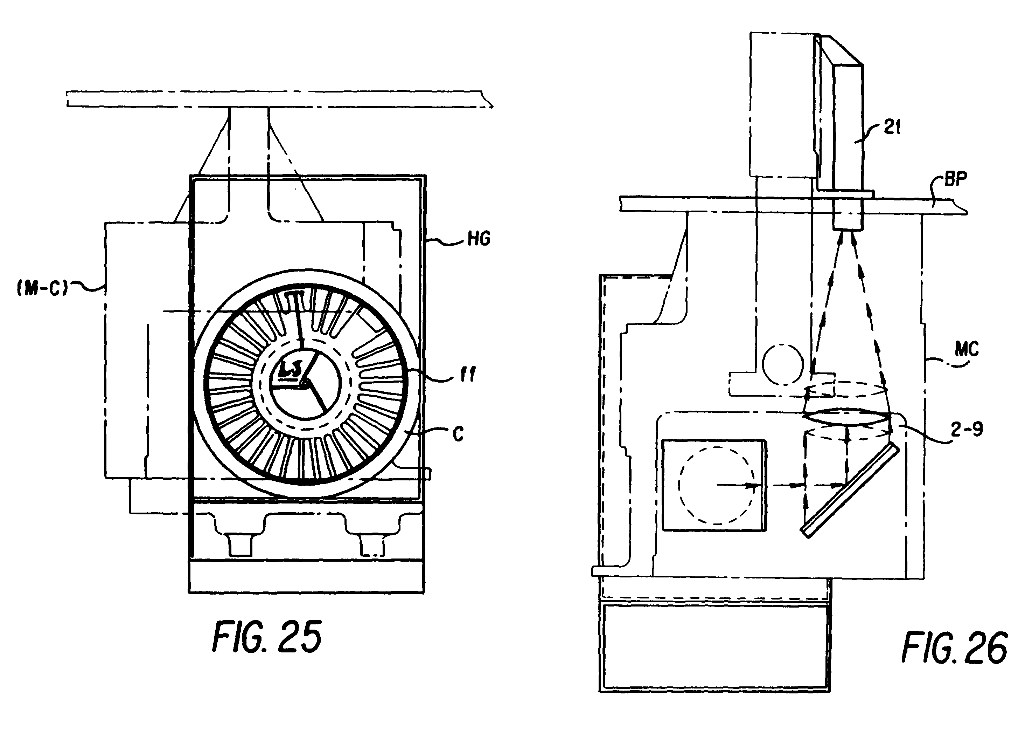

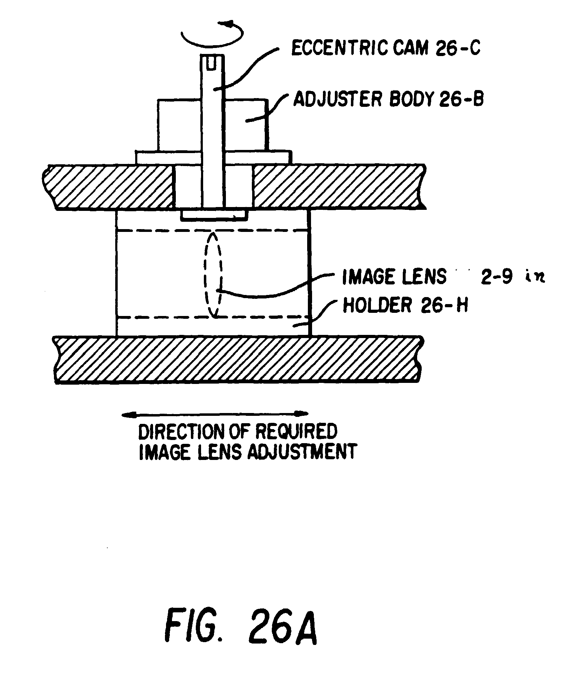

Mounting angle and optical properties of beam splitter 2-3 to ensure a 50/50 light distribution (front and rear); adjustability and stability of the trunnion mirrors to keep their image-beam centered on their CCPD; adjustability and stability of each image lens to keep its image-beam focussed on its CCPD; the spectral output of the lamp XL; the position of each illumination lens 2-9, 2-9' (Figs. 17, 26), to so dimension their beams onto their fiber-optic bundles as to give "matched" output beams of the same, calibrated intensity; the "winding" and randomized output of the fiber-optic bundles, 21, 21'; the optical characteristics of the "photopic filters"; and the Filter Response of the Hot Mirror and photopic filters (deviation from a prescribed response will degrade image quality i.e., color response). These factors should be coordinated to produce images of satisfactory quality and accuracy, as will be further discussed.

### --- details of Camera Submodule:

Turning to our preferred imaging (camera) module embodiment (cf. 1-110 Fig. 2, etc.), note that, in general, the hardware and interfaces comprise: an Image Lift Subunit, an AC Power Distribution Unit, a Power Control Module, a Lamp power supply, Track components, Internal and External interfaces.

The document transport track of the Camera Submodule has physically independent front and rear guide walls. They are made of metal and have removeable glass inserts. (The entire front guide wall assembly may be removed.) The center (glass-in-slit) portion of the walls is named the optical gate. The guide walls at the optical gate (slit) are approximately (0.080 of an inch) 2,03 mm apart (slits).

Light output by each (Fr., R.) Symmetrical Lighting assembly is focused through its optical gate onto the passing document (front, rear).

The guide walls are equipped with a release mechanism that opens them approximately three inches. The release mechanism consists of an L-shaped handle and a track-open safety switch. Turning the handle counterclockwise opens the guide wall, turning the handle clokwise closes and locks the guide wall. If the guide wall is not completely closed, the track-open safety switch sends a signal to the AA logic gate on the document processor. The track-open safety switch is located directly to the rear of the guide wall release handle.

The left guide wall has one beam-of-light (BOL) document detector; the right guide wall has two BOLs. The BOLs trace the progress of documents through the Camera Submodule's document transport track.

Each BOL has a light source on one side of the document path and a sensor (phototransistor) on the other side of the document path. These sensors are aligned with the light source. As documents pass through the BOLs, they interrupt the beam of light. Document detection status is interpreted by the document processor.

Mechanical drive for the document transport track of the Camera Submodule is supplied by the document processor through a mechanical belt and pulley system. The Imaging Module is the last module before the pocket modules. Because of this configuration, the Imaging Module can be installed into an existing DP-N (Unisys) Document Processor. The addition of an Imaging Module reduces the number of pocket modules that can be driven by the first control module from four to three. With an Imaging Module installed, the second control module drives five modules instead of four. Figure 9 illustrates the mechanical configuration of the Camera Submodule document transport track.

The Image-Lift unit performs image acquisition and includes : a lamp-cooling fan unit, an electronic camera PWBA assembly, a pair of fiber-optic/optic-tower assemblies, with lenses, mirrors, etc. and a mount-casting for the latter assemblies.

The Image Lift Subunit is attached to the document transport mount and contains the mechanics, optics and electronics necessary to acquire images of documents at the real-time processing speed of the Document Processor 1-11. Images of documents are captured, in real time, as they pass through Processor 1-11 at very high speeds (prefer 300 inches per second). The Image Lift Subunit, as above-noted, acquires document images by illuminating both document sides and capturing an electronic image of each.

### --- Illumination elements (Figs. 11, 17):

High intensity light is output by a high-pressure lamp XL thru an aperture S. The light immediately encounters an infrared-removing mirror ("Hot mirror") 2-1 which filters-out the infrared component and reflects it to an Energy-Dump E-D, where it is dissipated as heat (Fig. 11); [Note: excessive infrared can degrade the sensors and interfere with imaging].

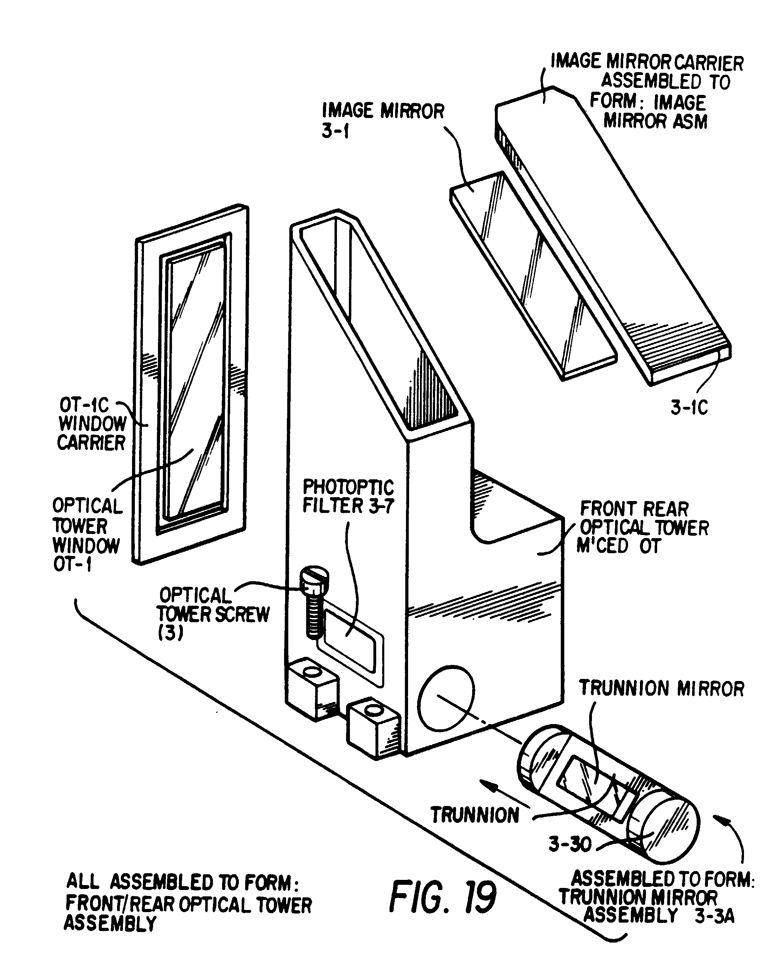

Light source XL preferably comprises a 1000 Watt, high-output, commercially-available xenon lamp bulb LS. Bulb LS (Figs. 18, 17, 25) preferably draws 32 to 50 amperes at 20 volts (with a voltage rise of 30 KV. during initial ignition) and is mounted in a housing HG including an imaging-aperture S through which its light output is projected (onto mirror 2-1 etc.) A cooling fan F (Fig. 17) is placed opposite slit S, while the bulb LS itself is surrounded by a heat sink SK (including fins ff) of cast aluminum. Heat sink SK defines an inner cylindrical space surrounding, and contacting, bulb LS to conduct heat away. The outer surface of SK exhibits radial fins ff which are surrounded by a plastic container C. Cooling air is thrust by fan F across fins ff to exit through exit-slots ES disposed all about housing HG, and around slit S. This gives a continuous flow of air for cooling the lamp bulb LS.

The Lamp Assembly XL (refer to Figures 17, 18) is in a sheet-metal box HG that houses the lamp LS, the heat sinks SK and a Lamp Ignition Module I-m, The cooling fan F is secured to the cover CV of the box.

The Lamp Assembly and cooling fan are both field-replaceable units. For example, if a lamp or Lamp Ignition Module malfunctions, one unscrews the cover and replaces the box (and all its contents) ; one then reattaches the cover and cooling fan.

Cooling fan F has a rotational sensor that monitors its performance. If the fan fails, lamp LS is at risk of overheating and failing. In addition, fan F always turns when the document processor is on, to this ensure cooling of the lamp even if the Imaging Module is powered-off.

The Lamp Assembly is attached to the Image Lift Subunit. Light exits through a hole S in the rear of the Lamp Assembly into the front of the image lift. This mechanical interface is covered by a cylindrical urethane seal 4-7, which ensures that dust and debris do not enter the Image Lift Subunit (e.g. see Fig. 18).

Lamp LS is a 1000-watt, short-arc, high-pressure (Xenon) device that requires 32 to 50 amps of current to operate. The amount of current required is dependent upon the age of the lamp and the intensity required of it. (Newer lamps require less current to operate). Lamp LS does not operate correctly with less than 32 amps of current.

The intensity of lamp LS is controlled by Imaging Module software through the Diagnostic and Transport Interface and Lamp Control PWBAs. As the lamp ages, additional current is supplied to it to compensate for its aging process. The intensity of the lamp is to be thus held constant throughout its lifespan.

Lamp LS is held in place by heat sink assembly SK, which helps dissipate the heat energy generated. The lamp has an estimated lifetime of 2000 hours. (Its life expectancy decreases slightly each time it is powered-on.) A Lamp Ignition Module I-m (Fig. 18) provides starting voltage; it produces a 30 kilovolt pulse at approximately ½ second intervals.

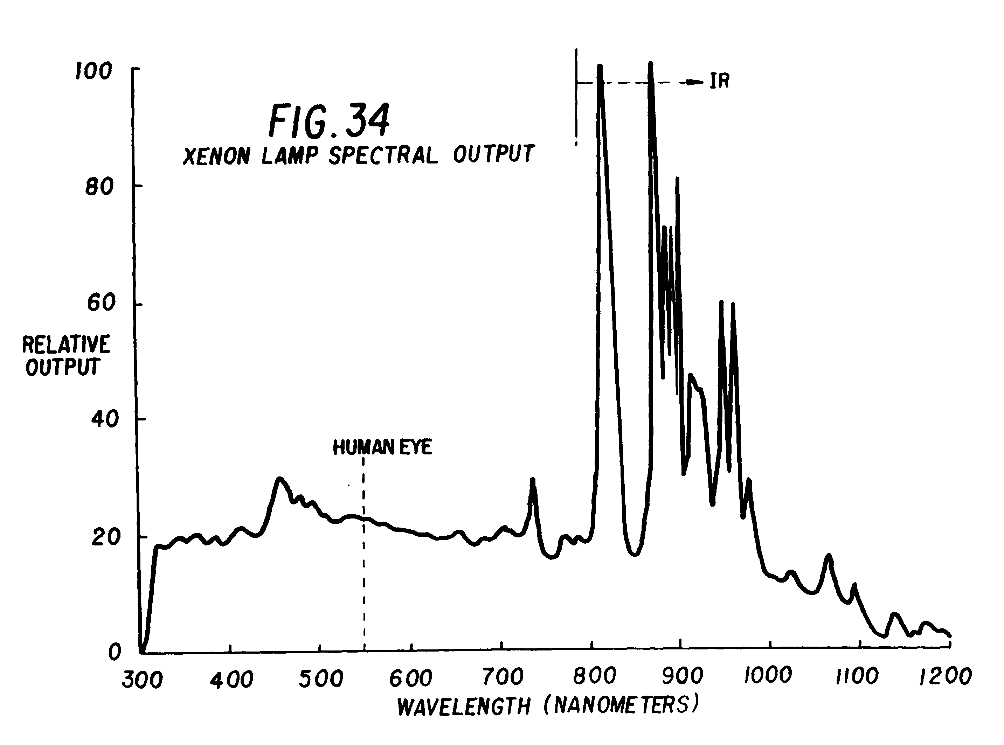

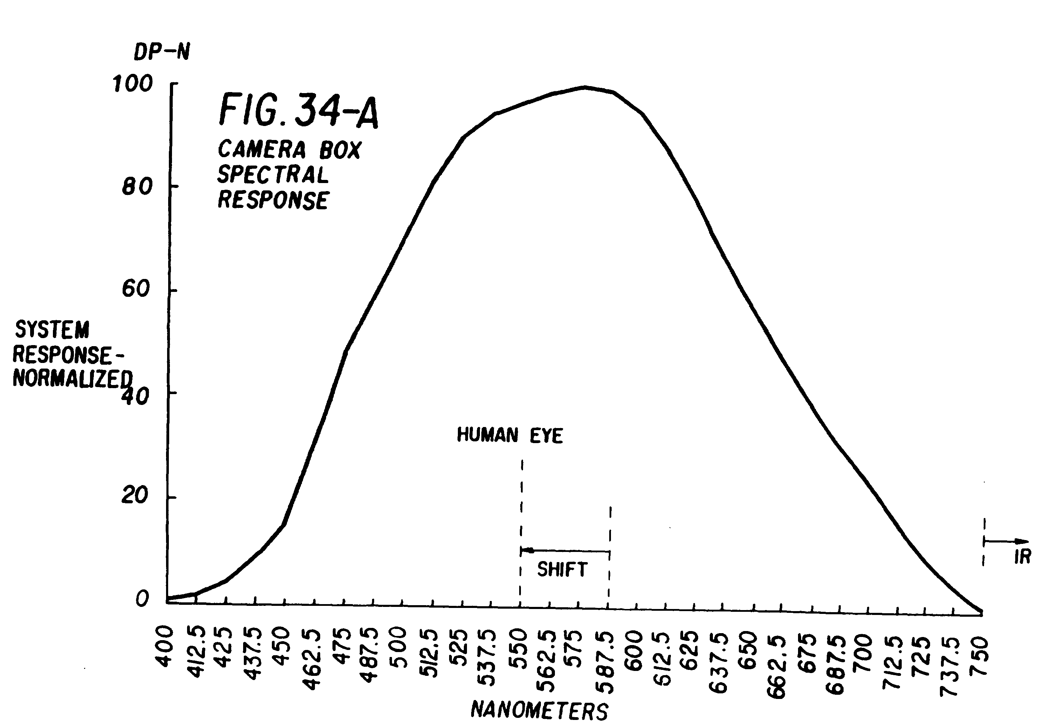

Fig. 34 generally depicts the (ideal) spectral output of such a lamp LS, giving intensity vs wavelength.

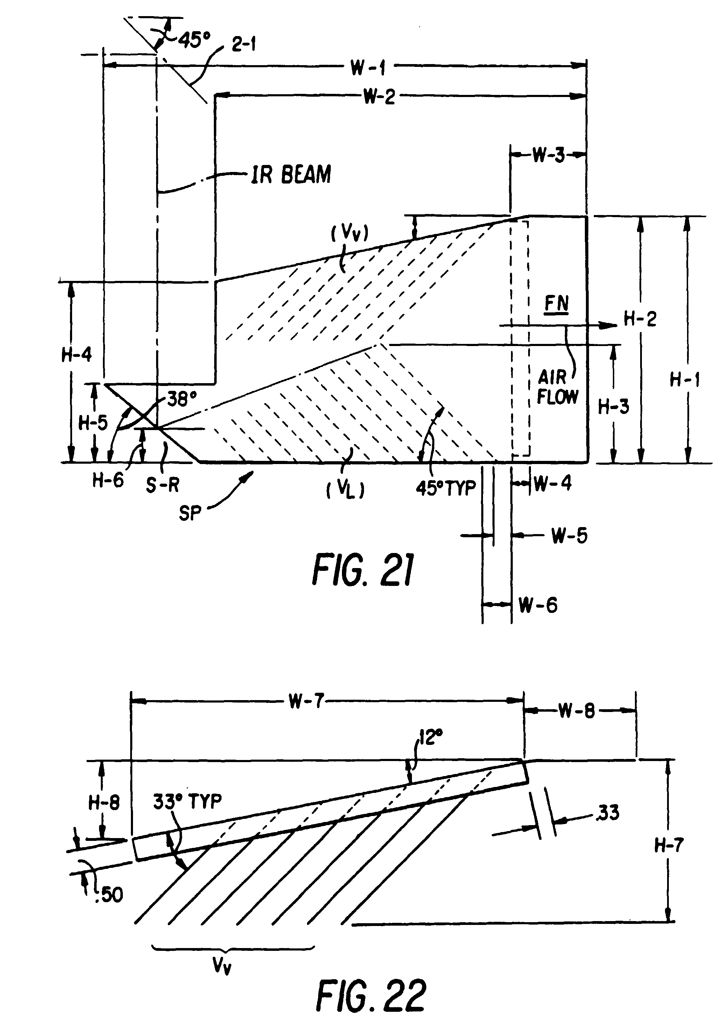

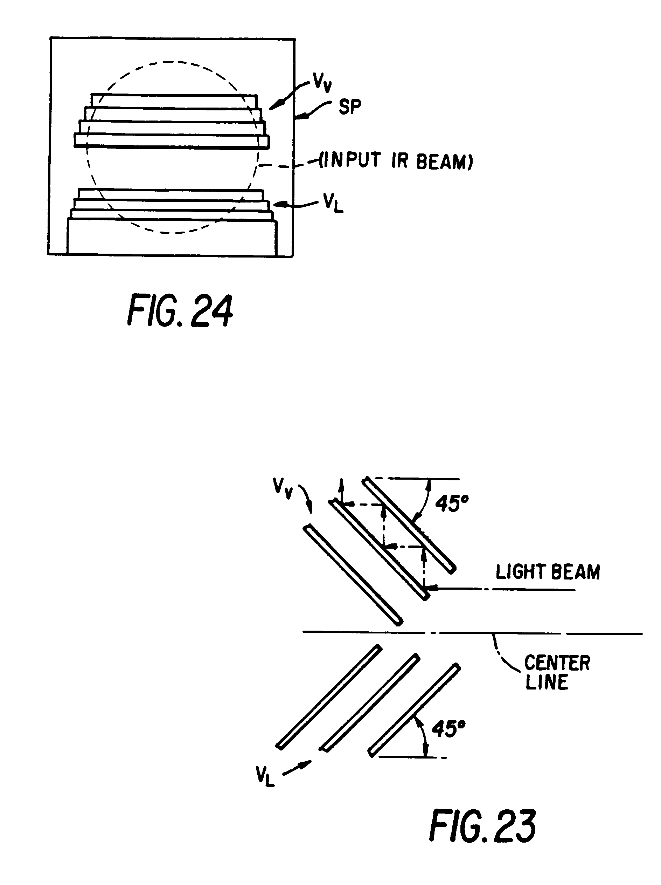

The infrared energy-dump E-D consists of an enclosure SP with upper and lower sets of blackened metal vanes (vᵤ, v_{L}' Fig. 17) to absorb the IR. A fan FN is provided at one end of enclosure SP to draw cooling air over vanes v. Fig. 21 rather schematically illustrates this Energy-Dump E-D in side view (upper vanes in Fig. 22), showing fan FN at the rear of enclosure SP, with upper and lower sets vanes (vᵤ, v_{L}) indicated in phantom (see arrow denoting air-flow over vanes; assume IR beam from hot-mirror 2-1 enters to impact reflector SR at the front of SP --- see schematic front view in Fig. 24). As indicated in Fig. 23 (a schematized, partial, side-view), upper and lower vanes vᵤ, v_{L} face one another, leaving a "convergent-cone" space there-between for beam-entry. In each set, the vanes are aligned parallel and equi-spaced (e.g. ½" apart); they obliquely-face the opposite set, being disposed at 45° to the centerline of SP. Reflector S-R, provided at the front of SP, diverts the in-coming IR beam into the conical "mouth" between the two sets of vanes (vᵤ, v_{L}). With the IR component removed, the remaining beam spectrum will be "safer" (cooler) and more closely "matched" to the response of the CCPD.s (see below).

The resultant "cooled" light beam is passed from hot mirror 2-1 to a beam splitter 2-3 (Fig. 11); i.e. a partially-metallized mirror that reflects one-half the beam and passes the other half. Between beam splitter 2-3 and hot mirror 2-1, a safety shutter Sh is preferably provided for selective interception of the light beam, whereby to divert the entire beam to Energy-Dump E-D in the event of emergency shut-down or for maintenance purposes (the beam from lamp LS is powerful enough, when focused, to cause injury to the human eye; note: Xenon lamp LS is preferably kept lit at all times during system operation; lamp life degrades as a function of the number of ON/OFF cycles). Shutter sh is preferably mounted to be pivoted down (as shown), when activated, and is sufficiently reflecting to so direct the entire beams to E-D (to reflector S-R thereof -- see Fig. 17).

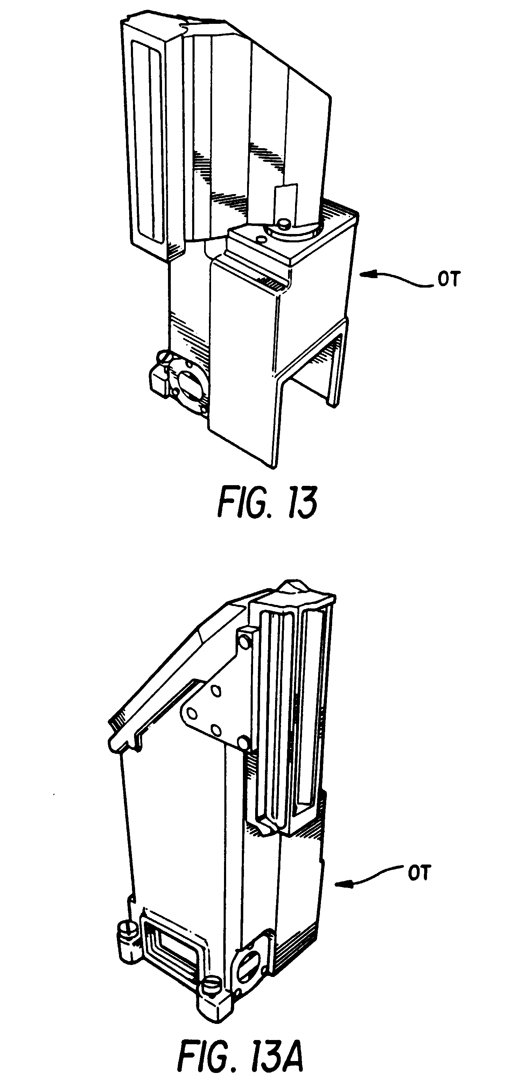

Beam splitter 2-3 thus develops a pair of like illumination beams, a "Front beam" sent to the front side of the document, and a "Rear beam" to the back side. Thus, from splitter 2-3, one beam is reflected to front-illumination mirror 2-7', while the other (the thru-beam) goes to a Corner Mirror 2-5. (Figs. 11, 17, 20). Mirror 2-5 diverts its beam to a second (Rear) illumination mirror 2-7. Illumination mirrors 2-7, 2-7' are essentially identical; each diverts its beam upward through a respective illumination lens 2-9, 2-9' (these are identical), and --- according to a feature hereof -- they can (adjustably) focus the appropriate beam-size (amount of light) on the entry-aperture of their respective fiber-optic bundle thereby regulating the amount of light emitted at bundle output (e.g. see Figs. 13, 35, 13A).

That is, rather than reducing lamp-power/intensity (e.g. via a potentiometer controlling lamp-current) as would be more conventional, we prefer to move these Lenses 2-9, 2-9' toward or away from their respective fiber bundles 21, 21' and by so adjusting focus, adjust and "match" their beam intensities, quite easily and inexpensively (e.g. see 2-9 in Fig. 26, where such shifting is indicated in phantom). As discussed later, each fibre bundle 21, 21' is adapted to receive a relatively circular input light-beam and to output it, reshaped and with segments redistributed, as an elongate "bar" (rectangular beam) of light Which is quite uniform along its length and (narrow) width.

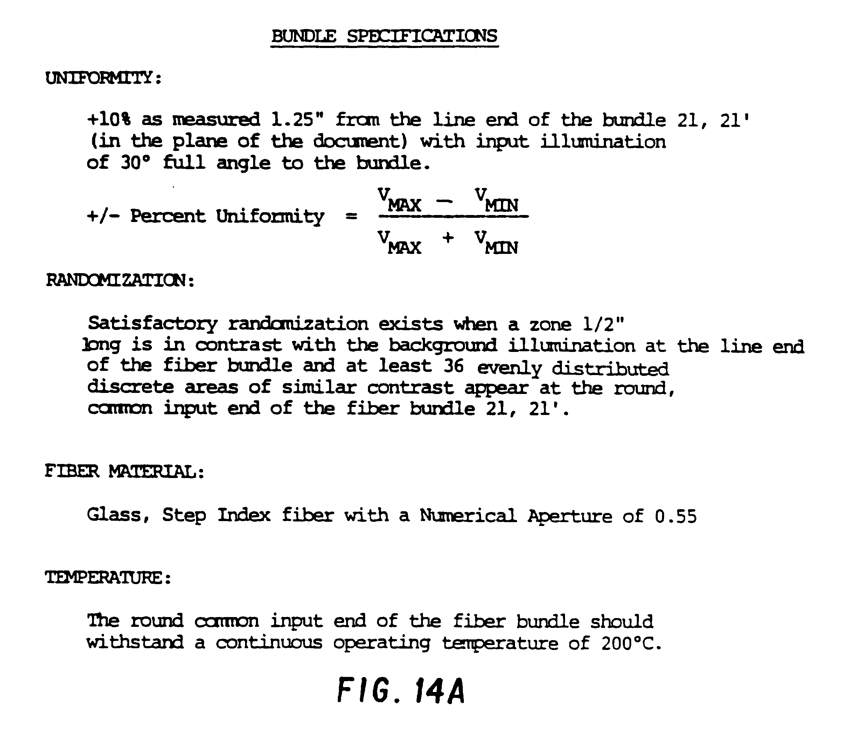

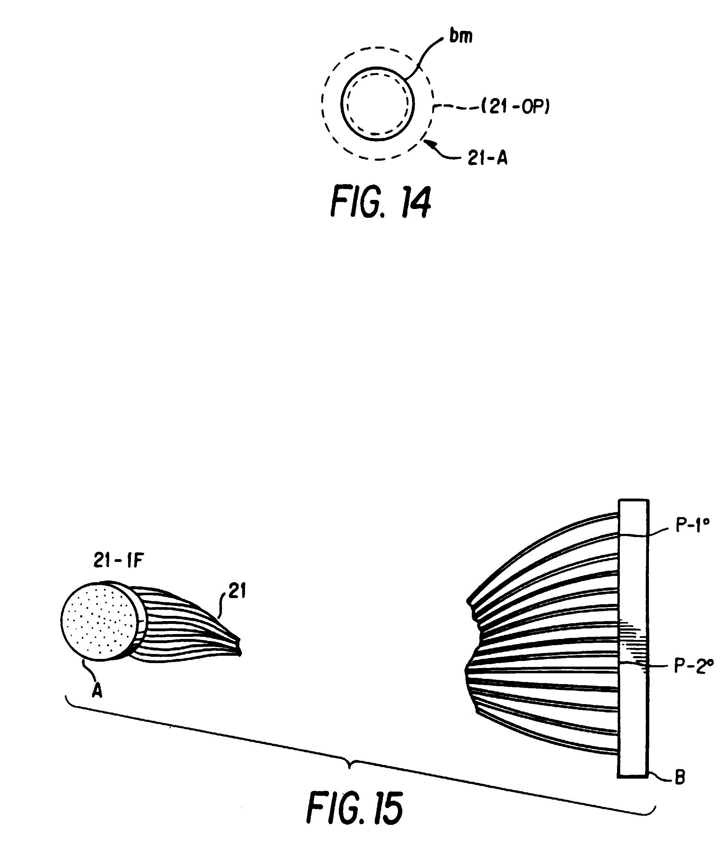

Thus, as illustrated very schematically in Fig. 14 (front view of a "circular" fibre-bundle input-face or entry-aperture 21-1F, with 21-OP representing representing the outer of this input-face), workers will appreciate that simply shifting such a lens 2-9, 2-9' to change its focus, one can quite simply change the beam-diameter on an entry-aperture 21-F (changing intensity at output face 21-E; yet do so proportionately), --- while still keeping the outptut "bar" quite uniform in intensity etc. (e.g. an input beam twice the size of maximum aperture OP would yield about ½ the output intensity). Thus, for example "maximum" beam intensity can correspond to an input beam-diameter matching that of the full entry-apertures; then output intensity can be adjusted-down by simply changing lens focus to enlarge this beam's input-diameter and so reduce the amount of entry light. And the two (Front, Rear) output "bars" can be "matched" in intensity quite easily and inexpensively (e.g. a less-desirable alternative is the well-known, expensive, delicate "iris" structure used in consumer-type cameras). Thus, according to this feature, one can calibrate and match the two illumination intensities by simply adjusting each focus-lens onto its fibre bundle entry-aperture. And so, for calibration of illumination-intensity, each beam of light focused on its fiber bundle is regulated according to its lens-focus. As mentioned, each entry-aperture 21A (of a fiber-optic bundle) is relatively circular (e.g. diam. of .70"), while each output-aperture thereof is arranged to provide an elongate rectangular beam (bar of light), sufficiently high to span, and illuminate, the contemplated slit-height/document-height (e.g. 13,34 cm (5.25") height "by 1,91 mm (.075")" width is found satisfactory) . Each optic-fiber bundle is arranged to receive its respective input beam at its circular entry-aperture; and, the fibers are fanned-out, and "randomized", along their length --- to be quite uniformly and randomly distributed along the rectangular output (exit-aperture). This converts the input circular beam to a rectangular output beam spanning its respective slot (vertically and horizontally). Interestingly, bar-size doesn't change as a lens is focused/defocused because of this "randomization".

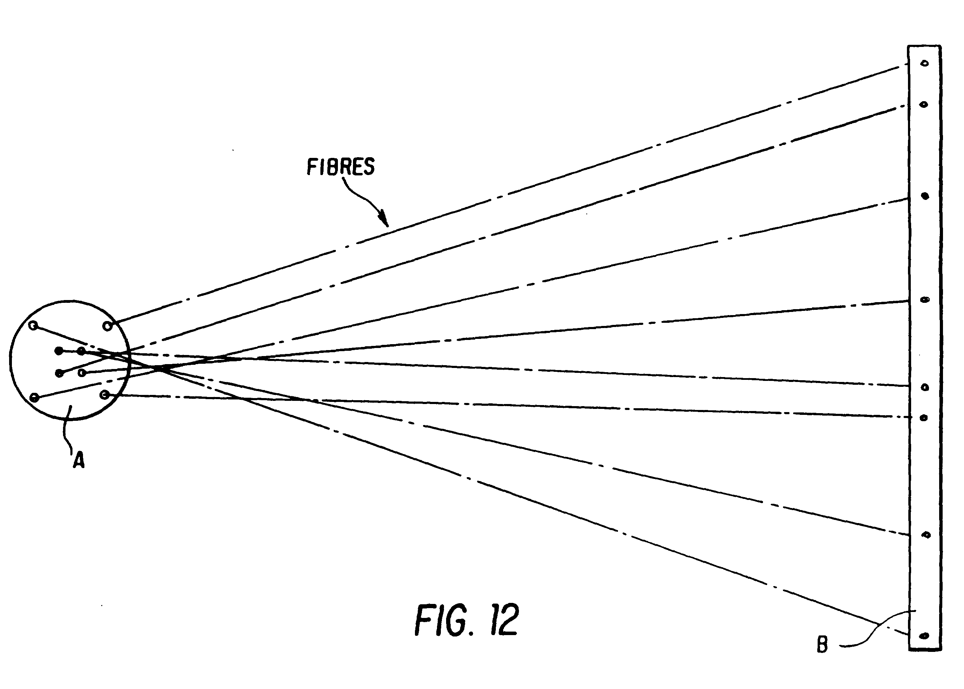

Thus, as a feature hereof, the optic fibers of each bundle are "inter-leaved" so that their output is "randomized", to yield light evenly distributed along across a respective slit. That is, as indicated fragemtarily, and very schematically in Figs. 12, 15, fibers are arrayed from circular entry-aperture A to rectangular exit-aperture B so as to randanly and evenly distribute light along exit aperture B. For example the fibers at the center of entry-aperture A (where intensity may be maximal) might be distributed uniformly along exit aperture B. Similarly, fibers (any number at the periphery of A (where intensity may be a minimum) will be distributed uniformly along B, yet in random fashion (e.g. see Fig. 14A giving illustrative specification for 21).

Such randomization can be achieved by arraying a first bunch of fibers in a layer along the length of aperture B, then gathering this "bunch" into a "first cluster" at aperture A --- and then repeating this any times, with each successive cluster placed at a different spot in circular entry-aperture A, until the appropriate aperture-B-thickness (width) is built-up.

Fig. 15 very schematically illustrates the kind of results that such randomization should achieve. Here, a fibre bundle 21 will be understood as depicted with circular entry aperture A and rectangular exit-aperture B. Now, with ambient (or other reasonably good) illumination on B, one places a pencil P (or other narrow light-obstruction, as P-10) across any part of B, at random, and observes the effect at A. Where A will normally exhibit a dull white "glow", the obstruction should produce a "sprinkled-pepper" effect (as in Fig. 15), with a few tiny black "dots" (dark points) sprinkled relatively uniformly across A. Then, successive "blockings" at any other points along B should yield a similar effect. What should not appear at A are relatively large opacities, or a very non-uniform distribution of black dots.

### --- two dual, Anti-Shadow illumination-beams:

Each Symmetrical (Front, Rear), illumination assembly (e.g. Fig. 36 for Front-illumination) divides the light (again) into two equal portions; these portions to be focused onto (their side of) the document in tandem, from opposite 30 degree angles. This ensures that a document is evenly illuminated from two angles. For example, otherwise if the document has creases, those may cause a shadow which could compromise the output image. Illuminating each side of the document from two symmetric opposing 30-degree angles reduces the possiblity of such shadowing effects.

Each such Symmetrical illumination assembly thus shines its two light-bars onto the document through an "optical gate" (slit) at ± 30 degree angles to compensate for document imperfections and provide more uniform document illumination. The embodiment that provides these two "dual-symmetric-oblique illumination beams on each side of a document will now be further detailed. Since Front-side illumination-optics are essentially identical to those for the Back-side, only the Front-side will be detailed (see Figs. 35, 36).

Here, the "elongate rectangular beam" (light-bar) output from the Front fiber-optic bundle 21' goes to a respective beam splitter (14-1' in Fig. 36), where 50% of the light-bar is reflected and 50% is transmitted, so that two beams are presented on each side of the Front slit. One of these beams goes to a cylindrical plastic convex lens (e.g. 14-5') that focuses its beam through the slit and onto the "document image plane" I-P (i.e. the locus of document-passage). The companion beam goes thru a different cylindrical plastic convex lens 14-3' to a mirror 14-7' which directs it onto the same point of the "document image plane" --- but does so from a symmetrically-opposite angle (so the beams converge at ±30° from the "normal" to plane I-P; see "normal" OCL). This is done via adjustable back-mirror 14-7' which can be set at the appropriate angle to so direct its beam onto "image plane", I-P at the same point [thru image-slit in guideway].

Each such Front/Back optics system is identical and "symmetric", so that, on the Front and Back side of the document, dual, converging beams impinge on their slit and on "image plane" IP --- the Front slit being offset from the Rear. We have found that so projecting dual illumination beams at these ±30° angles provides optimal light intensity and image clarity. As workers know, maximum illumination intensity is typically along the "normal" to a document (i.e. the perpendicular to its plane) -- but, unfortunately, this is also where glare is a maximum; also this is where it is most desirable to capture an image. We find that "anti-shadow" illumination is best directed at about 45° to the document -- but this angle gives an intensity-level that is usually too low and inefficient (cf. reflected intensity falls-off sharply as one moves away from the "normal"); so we prefer to accept less than optimal anti-shadowing as a trade-off to increase intensity to a more satisfactory level --- and we have found that, for embodiments like this, opposing angles of ±30° (± 5°) are surprisingly good.

"Image plane" I-P will be understood as (e.g. Fig. 35) defining the locus of both the front and rear sides (close enough) of a document as it is being read at the two offset "imaging sites" along the document transport track. Each such "site" is defined by a respective slit-opening SL in the guides, covered by glare-resistant glass and offset from the other slit by about 11,3 mm (0.445 inches). It is important that document location be closely controlled; i.e. for optimum focus and minimal image-distortion (due to Front-to-Rear movement of a document in the track), the document should be restrained within ± 1,14 mm (± 0.045") of nominal track-centerline (i.e. intersection of dual, converging beams). Given this, the images produced by the two Front/Rear illumination beams can be captured with uniform balanced illumination. Light intensity is optimum where each (FR, R) set of dual converging beams intersect, and falls-off sharply as one moves away from this intersection.

The Front "image point" (slit) is offset from that in the Rear by a spacing (e.g. 11,3 mm (.445 inches) in the preferred embodiment) sufficient to avoid interference between beams (e.g. "back-light" from one illumination-beam could pass thru the thin paper document and interfere with illumination-imaging on the opposite side.) System electronics processes the analog signal from the CCPD detector. A Front CCPD captures the image on the front and a rear CCPD captures that on the back side of the document; and appropriately times and records the signals received so that the images recorded for the front and rear sides are properly coordinated and are identifiable (as a pair) for processing and storage.

System calibration and "illumination-set-up" consist in adjusting the illumination lenses 2-9, 2-9' and mirrors 2-7, 2-7' (Fig. 11) to direct and focus the desired (circular) beam-size onto the circular input-aperture of each fiber-optic bundle 21, 21'; then adjusting the Front and Rear mirrors 14-7, 14-7' (Fig. 36) to focus the two respective pairs of oblong illumination beams (thru a resp. slit) so that each pair meets at a common point along the "doument image plane" I-P.

Having described the "path of illumination", we now turn to the image capturing paths; i.e. the optical paths of images from the front and the rear sides of the document (these are symmetric, and essentially identical). One side will be described in detail, with the understanding that the essential elements and description are the same for the opposite side.

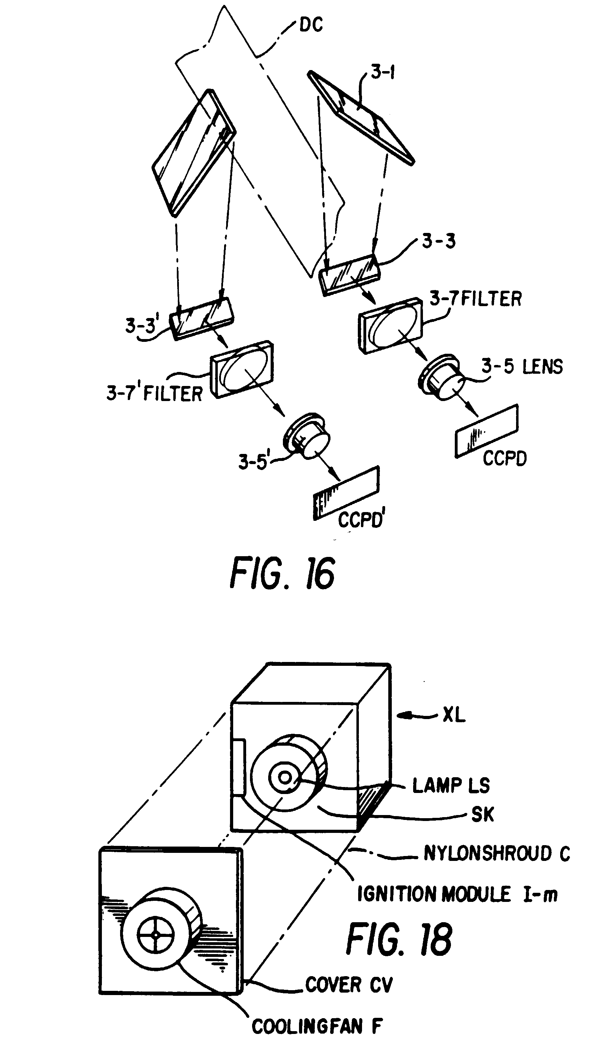

### --- image-path (Figs. 16, 30, 31, 32, 33) :

Figs. 31, 16 very schematically and simply summarize the image-path (both Front and Rear use essentially the same elements). Thus, when a document portion (passing a respective slit) reflects the illumination to an image-mirror 3-1, it reflects it (down) to a rotatable Trunnion mirror 3-3. Mirror 3-3, in turn, reflects it to a respective CCPD, via a photopic filter 3-7 and image-lens 3-5. Mirror 3-3 can be rotated to center its beam on its CCPD.

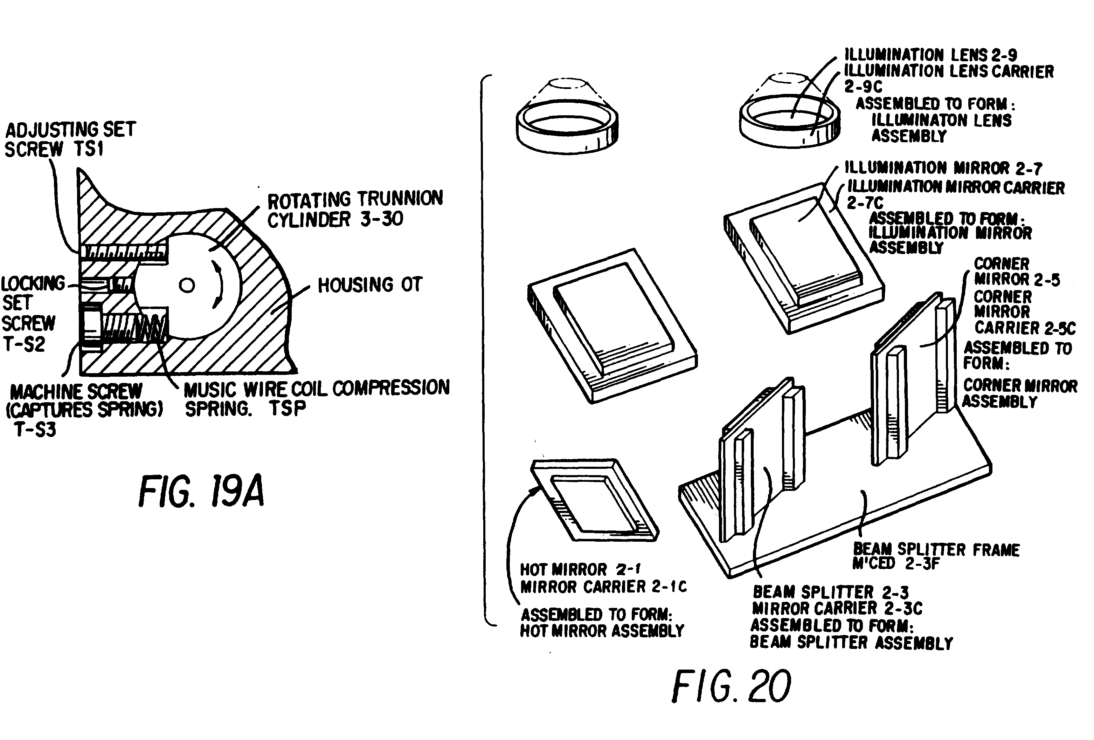

Thus, the Front/Rear dual illumination beams (from a respective fiber-optic bundle, after splitting) will be understood as impacting the passing document at offset points, each illumination beam being understood as reflected directly-back (i.e. normal to plane I-P) to a respective image mirror 3-1, 3-1', tilted at 45 degrees from plane I-P (Figs. 16, 31, 32). Each image mirror 3-1, 3-1' (Front, Rear) re-directs its reflected beam vertically down to a rotatable "plane trunnion" mirror 3-3, 3-3', which diverts its beam, aiming it to be centered on the associated CCPD via a filter 3-7, 3-7' and a focusing lens 3-5, (3-5'). Each trunnion mirror 3-3, 3-3' is mounted in a housing 3-30 (see Figs. 19, 19A, 31) which allows it rotational adjustment, without disassembly, to adjust image position (center it) on its CCPD.

As shown in Figure 19A, the adjustment mechanism consists of two set-screws TS-1, TS-2 which contact seats cut-out in the ends of the semi-cylindrical mirror-casing 3-30, each being threadably seated in the housing. More particuarly, the trunnion cylinder 3-30 (Figs. 19, 19A) is rotationally restrained between the tip of an adjusting set screw TS-1 and a coil spring T-SP (a music-wire coil compression spring lodged in housing OT to contact 3-30 restrainingly, being held in place by a machine screw TS-3). Rotation of set screw TS-1 will cause trunnion cylinder 3-30 to rotate about its axis against the force of spring T-SP. Once the trunnion mirror 3-3 is correctly located, a locking set screw TS-2 is tightened to lock the adjustment.

Each trunnion mirror 3-3, 3-3' thus diverts its image-beam horizontally, along a path essentially parallel to the document-path, through a "photopic" filter 3-7, 3-7" (See Fig. 31) and then through image lens 3-5, 3-5' which focuses the beam onto the associated CCPD (CCPD'). The photopic filters 3-7, 3-7' are described later; each comprises a plane glass plate with, multi-layers of thin dielectric film, superposed thereon. This series of optical coatings is especially formulated to shape the spectral response of the system as desired. The output from each filter thus tailors the image spectrum and conditions it (approximately as shown in Figure 34-A,to approximate the response of the human eye; here, the light from a Xenon light source LS is "shifted-red" by approximately 25 nm to give this result.

Each image lens 3-5 (3-5'), following its filter, is made adjustable so as to focus its beam onto the surface of its CCPD; and, each can be adjusted for "Coarse" and "Fine" focus by means of a rotating-cam, driving in a slot of the Tower housing OT (see Fig. 26-A).

Lens 2-9 in Fig. 26 is illustrated in detail in Fig. 26A. An eccentric cam 26-C engages in a slot on top of the image lens holder 26-H. Rotation of cam 26-C will cause the image lens holder 26-H to move left ± 0,635 mm right by (±.025") (the "throw" of the eccentric section of the cam). If more adjustment is required (± 3,175 mm) (±.125"), the screws (not shown) securing the adjuster body 26-B may be loosened and the entire adjuster body, eccentric cam and lens holder moved back and forth.

For the image capturing path, "set-up" procedure consists in rotating each trunnion mirror 3-7, 3-7' to center its beam on its CCPD; then adjusting each associated image lens to focus its beam onto its respective CCPD.

The (two) Electronic Camera PWBAs each include a linear CCPD sensing array, with video signal amplification, clock generation, clock buffering, and power distribution circuits. The selected CCPD ("charge-coupled photo-diode") device will have a response analogous to the retina of the human eye when combined with the response of the photopic filter; this is a critical component of the system. In this preferred embodiment, a pair of like "Reticon RL-1288" linear-array, silicon chips (with 1024 photodiodes) are used. The photodiodes are arranged and positioned to image the "vertical line" reflected image-beam from a document. Each like associated image lens 3-5, 3-5' gives magnification, as adjusted, to produce 0,127 mm (.005 inch)-high pixels on the surface of their associated respective document planes I-P. Each CCPD diode array is subdivided into eight segments, each photodiode element of the array converts light reflected from the document into analog voltage values. The converted electron-charge on the photodiodes is transferred to an analog shift register within the chip when a transfer pulse is applied (not shown, but well known in the art). The odd and even numbered pixels of each segment are output separately. The sensing array outputs a representation of the scanned document as sixteen analog signals; each signal amplitude corresponds to a pixel's gray level. The Electronic Camera PWBA also outputs synchronization (clock) signals and identification signals (front, rear sensing arrays).

We have determined that an optimal system response for the light impinging on such CCPD.s (for our image-capture purposes --- factoring-in the lamp, filter and CCPD used) should approximate the sensitivity range of the human eye. This is indicated in the spectrum of Figure 34-A. The spectral output of our selected Xenon lamp LS is fairly flat over the range 450-750 nm.; while peak human-eye spectral response is about 550 nm.

We find --- somewhat surprisingly -- that introducing "photopic" filters, as described, helps greatly to improve Blue-on-Blue contrast (i.e. contrast of blue-ink etc. on a blue background, as many checks etc. will exhibit). [note: "Photopic" is a technical term from the optical sciences, meaning: corresponding closely to the spectrum visible to the human eye.]

Thus, we introduce filters 3-7, 3-7', which, when combined with the spectral sensitivity of the CCPD detectors, yield an overall system response closely matching that of the human eye, with actual system response shifted 25 nm toward the red end of the spectrum. We have found that such a shift improves the response of blue inks on blue backgrounds, and, to a lesser exten, blue/green and green inks on similarly colored backgrounds. Experience has shown that this wavelength shift is very effective for purposes of our instant document processing.

Out "system Response" should therefore be "photopic" and should approximate the response of the human eye [we are imaging documents which are to be "read" by the human eye and are made up of inks and materials visible to the human eye]. Without this "spectral shaping" -- by the filter -- of the light incident on our CCPD detectors, our system would "read" documents rather differently than the eye does. [e.g. it would "see" in the infrared and would interpret color contrast rather differently; but it is imperative to maintain proper, "human" color contrast when it comes time to reproduce the images for human use.]

Fig. 31 (see also Fig. 33) very schematically and functionally, illustrates the "imaging-path"; i.e. the path of the image reflected from (a slice of) the passing document to a respective (Front or Rear) CCPD. Thus, the image will be understood as reflected from the slit-illuminated part of document doc moving along image-plane I-P, to a respective image mirror 3-1 (3-1' on other side) ; thence to a respective turnnion mirror 3-3 (3-3'); thence to its CCPD via respective "photopic" filter 3-7, 3-7' and focusing lens 3-5, 3-5'.

Imaging Process Recapitulated (Figs. 31, 33 described for Front side; Rear side the same):

Light reflected from the front "slice" of the passing document is directed to an "optical tower" (Front tower, OT, Rear Tower OT', see Figs. 32, 33 19) housing an assembly of mirrors. The light entering each optical tower is reflected down by an Imaging mirror 3-1, to a Trunnion mirror 3-3 below the transport level. Each Trunnion mirror swivels on a dowel or pin (see 3-30) and can be set (rotated) to center its beam on its CCPD (see Fig. 19A also). Thus, Trunnion mirror 3-3 diverts its light 90° to related "photopic" filter 3-5, which ensures that the optical system's spectral response is optimized for the CCPD, and better approximates human-eye response [each photopic filter is located at the base of its optical tower.]

Each image reflected by the trunnion mirrors passes through these filters on its way to the CCPD sensing array. After passing through the photopic filter, the image is focused onto a respective charge-coupled photo-diode (CCPD) sensing array (see "Electronic Camera PWBA" or printed circuit board assembly) by an associated Imaging lens 3-5.

Thus, as a document passes through the Camera Submodule, an intense vertical stripe of filtered light is focused on each side, to be reflected from the document to a respective CCPD sensor mounted on an Electronic Camera PWBA.

The Electronic Camera PWBAs convert the light so reflectled from the document into analog voltages, amplify these and send them to an Electronics Gate Submodule for Analog/Digital conversion, processing, compression, and eventual transmission to temporary storage [cf. the images are sent to a Storage and Retrieval Module SRM for subsequent retrieval by an application program -- see 1-13, Fig. 1]. Fig. 34A gives the spectrum of total system spectral response (i.e. output from CCPD, factoring-in effect of lamp, optics and filter, etc.).

### --- optic elements, recapitulation:

Preferred specifications for some optical elements described above will now be given. The CCPD sensing arrays preferably consist of 1024 photodiodes aligned, in one dimension, to image a vertical line of the document. The array is subdivided into eight segments, with each photodiode converting its portion of the image to an analog voltage (cf. light-induced charge accumulated on the photodiode). This is transferred to an analog shift register within the chip when a transfer pulse is applied (not shown, but well known in the art). The odd-and even-numbered pixels of each image (diode) segment are output separately, thus, each CCPD sensing array outputs a representation of each scanned document "slice" as sixteen analog signals, with the amplitude of each signal corresponding to its pixel's "gray level". The Electronic Camera PWBA also outputs synchronization (clock) signals and identification signals (front or rear sensing arrays).

The imaging module 1-110 incorporates several different types of lenses and mirrors. Thus, illumination lenses (2-9', 2-9 Fig. 11, which focus light onto a respective fiber-optic bundle 21, 21'), are preferably 75 millimeter (diameter), plano-convex lenses with a focal length of 150 millimeters. Imaging lenses 3-5, 3-5' (Figs. 16, 13, which accept light reflected by the document and focus it onto a CCPD sensing array) are f2.8, high-resolution lenses with a focal length of 50 millimeters.

"Maximum reflectance" mirrors (front-surface mirrors with 99 percent reflectivity) are preferably used as: corner mirror, 2-5 (Fig. 17), Front and Rear illumination mirrors, 2-7, 2-7', (Fig. 11) imaging mirrors 3-1, 3-1' (Fig. 32) and trunnion mirrors 3-3, 3-3'.

Workers will recognize that, instead of the preferred "linear" silicon CCPD.s; in some cases Gallium CCPD.s may be used, and/or two-dimension arrays -- or even "Camera tubes". Workers will also recognize that there are special advantages to using focus-adjustment to vary beam intensity (cf. adjust lens, vary beam-size on fibre-optic input-face) --- notably, that this involves no wavelength-shift as with more conventional methods. For example, it is common, with an incandescent lamp, to change the filament-heating input-current to vary light intensity --- unfortunately this also shifts the wavelength spectrum of the light, giving obvious problems to a CCPD or other "camera" means (similar problem with halogen lamps). So, workers may prefer our focus-adjustment of intensity as being unusually "wavelength-stable".

Xenon lamps (gas-discharge) are similarly "wavelength-stable" when their intensity is varied; fluorescent lighting is almost as "wave-length stable", but yields somewhat less-intense light, and this would be a less-preferred alternative.

### -- single-casting mount:

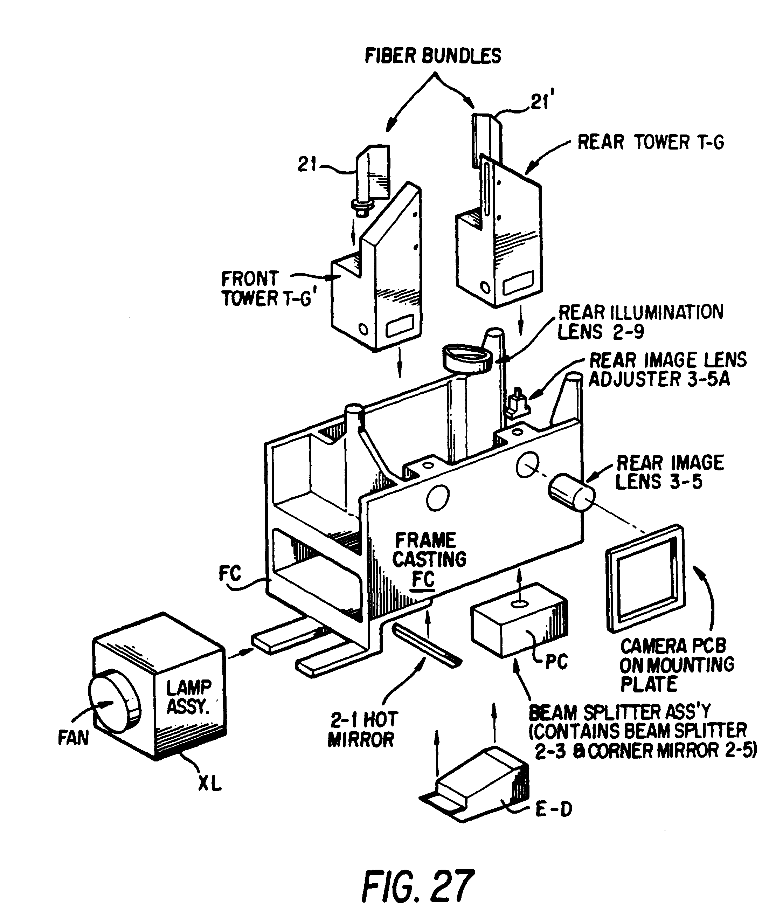

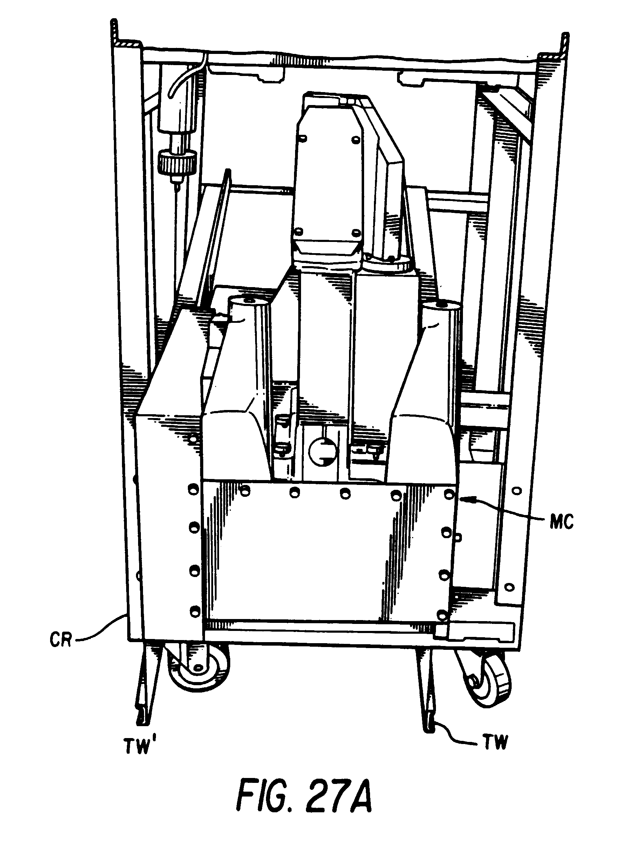

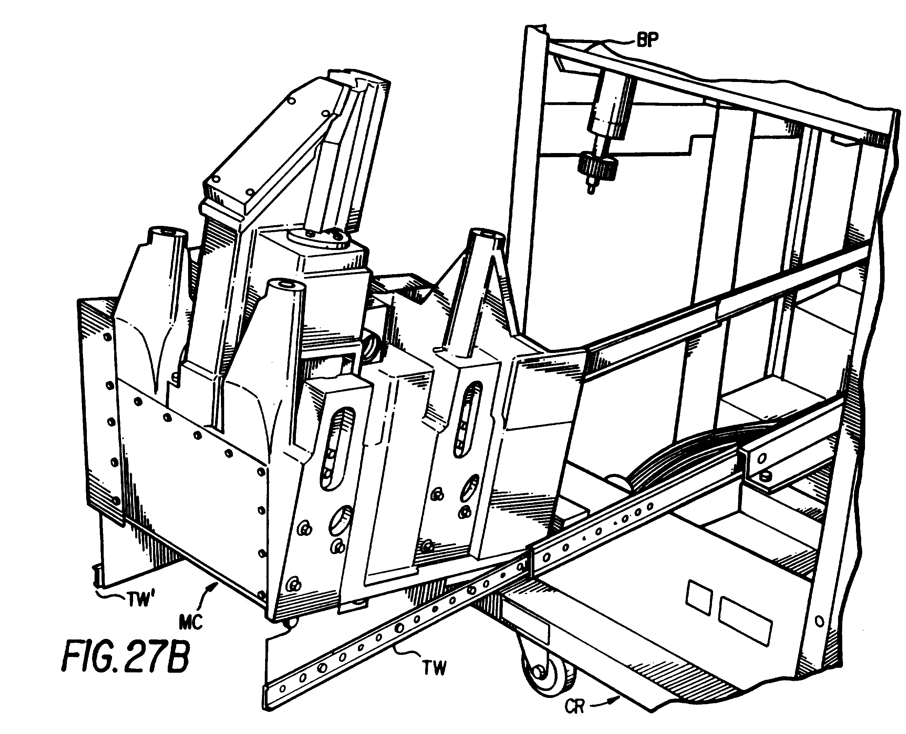

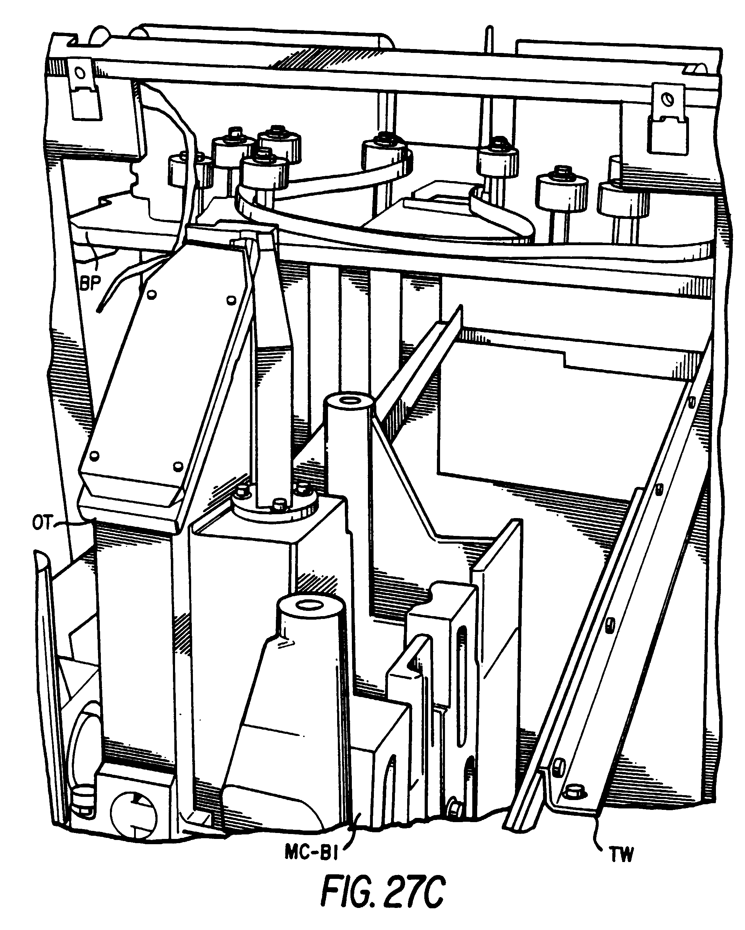

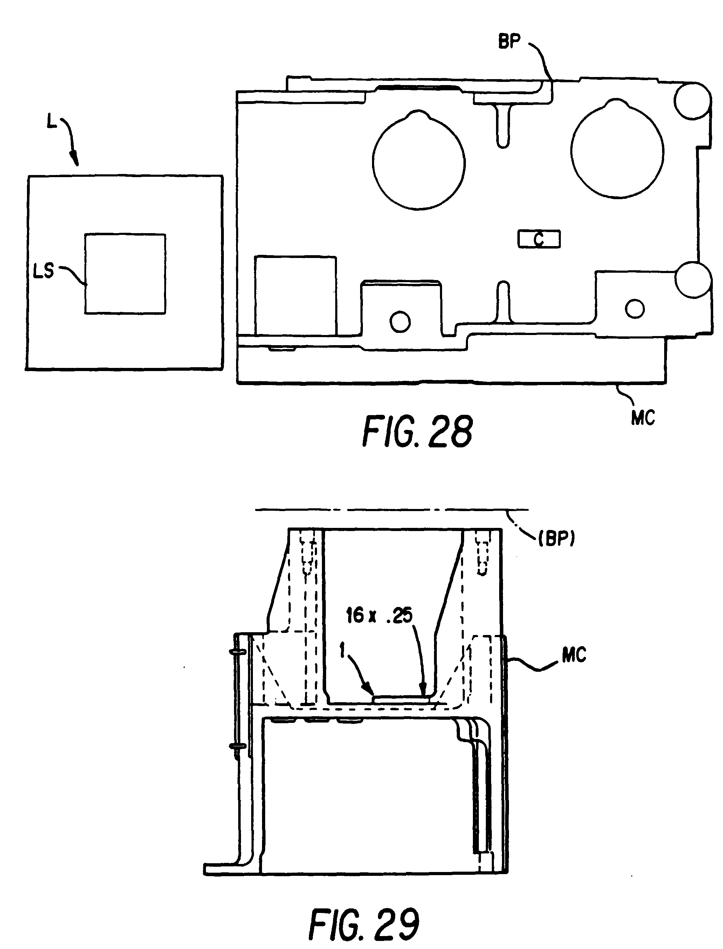

We prefer to mount illumination-optics, and the heat-producing lamp and its energy-dump, well below the transport array (platform, guides, belts, etc.) to enhance safety, ease of heat rejection, ease of assembly and ease of efficient servicing. By contrast, it would be more conventional to mount these items on the transport platform. Thus, as seen in Figures 27, 28, 29, the entire image-lift arrangement is modular, and is mounted on a single main casting MC which is affixed (bolted) to a base plate BP (Figs. 28, 29, 9) which carries the document-transport array. The lamp (housing HG) and energy-dump unit E-D are mounted on a related bifurcated casting FC which is affixed (bolted) to the main casting MC but under BP. On (or in) main casting MC are mounted the components makign-up both (Front, Rear) "illumination paths" and both "image-lift paths" as described above. A parallelogram-shaped casting P-C, open at both ends, contains the illumination-beam splitter 2-3 associated corner mirror 2-5 (Fig. 27) as an integral modular unit, and is attached to MC. Tower-castings T-C, T-C' (e.g. see Fig. 9A, note machine cover cov. raised) for each side of the document, each incorporate a 45° image mirror 3-1, 3-1' (Figs. 16, 32, 27), an associated rotatable trunnion mirror 3-7, 3-7' and a photopic filter 3-7, 3-7'. The image lenses 3-5, 3-5' and respective two CCPDs (each on a circuit board) are attached on a wall of main casting MC.

Fig. 27A shows casting MC, with one optical Tower casting mounted thereon, placed within frame CR of the document processor 1-11, on a pair of extensible rails Tw, Tw' (partly extended). Fig. 27B is a side view, showing the rails Tw, Tw' almost-fully extended, with transport base-plate BP pivoted up. Fig. 27C is an enlarged view of Fig. 27B, with up-tilted base-plate BP and part of casting MC shown in more detail (e.g. note the two casting "coupling-turrets" MC-B1, MC-B2; these, plus a third, MC-B3, will be understood as fitting just under base-plate BP when the casting MC is rolled-into Processor 1-11 on its rails Tw, Tw', and the baseplate is dropped into working position -- so that three (3) bolts into MC-B-1, -2, -3 can detachably connect MC firmly to BP.)

In conclusion, it will be understood that the preferred embodiments described herein are only exemplary, and that the invention is capable of many modifications and variations in construction, arrangement.

For example, the means and methods disclosed herein are also applicable to other related document imaging systems. Also, the present invention is applicable for enhancing other forms of imaging and related optical arrangements.

## Claims

1. A document processing system wherein documents are to be transported at high speed along a prescribed transport path (T-P) past a pair of offset image capturing sites, this system comprising:
transport means (BL, BL') for continuously transporting documents (Dc) past said sites at high speed, and without pause;
energy-source means (XL, LS) for emitting a beam of light-energy and for directing the light-energy at both said sites, in parallel;
energy-conveying means (21, 21') between said energy-source (XL, LS) and the sites; two image capturing means (CCPD, CCPD'), one disposed at each of said sites, each acting to capture an image of said documents (DC); and heat-dissipation means (2-1, ED) disposed operatively adjacent said energy-source means (XL, LS) and acting to extract light energy therefrom and dissipate it so as to shield the said sites and said conveying means (21, 21') from adverse light effects;
characterized in that
the heat-dissipation means includes means (2-1) for extracting at least a substantial part of the infra-red (IR) component of the beam of light-energy emitted by said energy-source means (XL, LS), and an IR dissipation-dump means (E-D) adapted to receive the IR component from said extracting means (2-1) and to convert it to heat.

2. The system of claim 1 wherein said conveying means (BL, BL') are essentially identical, each being adapted to operate on one side of each document (DC) as it passes a respective one of said sites.

3. The system of claim 2 wherein each site is adapted for use on a respective front and rear side of a passing document (DC).

4. The system of claim 3 wherein said sites comprise glass-filled slits (SL) dimensioned to operate on the contemplated data-portions of the documents (DC).

5. The system of any one of claims 1 to 4 wherein the heat-dissipation means includes a selectively-operable shutter means (Sh) for directing all the energy projected from the energy-source means (XL, LS) to said dissipation-dump means (E-D).

6. The system of any one of claims 1 to 5 wherein the dissipation-dump means (E-D) includes a finned, air-cooled heat-trap (V_{V}, V_{L}).

7. The system of claim 6 wherein said dissipation-dump means (E-D) includes surface means (V_{V}, V_{L}) in enclosure means (SP), adapted to receive the IR component of the light-energy and to unilaterally convert it to surface heat, said surface means (V_{V}, V_{L}) being arranged in an IR-trap configuration to receive the IR component from an input portion allowing little, if any, IR component to emerge therefrom.

8. The system of claim 7 wherein the surface means (V_{V}, V_{L}) comprises a pair of opposed sets of blades (V_{V}, V_{L}), the sets being disposed obliquely and symmetrically about the center-line of IR-entry, each set comprising a number of like "black-body" blades (V_{V}, V_{L}) arrayed in parallel and equidistant, while overlapping, to form one-half of a convergent closed IR-entry chamber (SP).

9. The system of claim 7 or 8 wherein an exhaust means (FN) is disposed at an open end of this enclosure means (SP), opposite the IR-entry portion, the exhaust means (FN) being adapted and arranged to pull ambient air rapidly into one end of the enclosure means (SP) and expel it at the other end, drawing it past most, or all, of said surface means blades (V_{V}, V_{L}).

10. The system of any one of claims 1 to 9, wherein said extracting means (2-1) is a selective reflector means being interposed across the light-energy beam path and adapted to divert only the IR component to said dissipation-dump means (E-D).

11. The system of claim 10 wherein the selective reflector means (2-1) is a "hot mirror".

12. The system of claim 10 or 11 when dependent on claim 5 wherein said shutter means (Sh) is disposed operatively adjacent the selective reflector means (2-1), being arranged and adapted to be selectively, automatically interposed to block the entire beam and divert it to said dissipation-dump means (E-D).

13. The system of claim 10 wherein a second reflector means (Sh) is disposed operatively-adjacent the energy-source means (XL, LS), being arranged and adapted to be automatically shifted into full-beam-intercepting position at prescribed "Emergency-Times" whereby to divert all the source radiation beam to said dissipation-dump means (E-D).

14. The system of any one of claims 1 to 13, wherein said energy-source means (XL, LS) comprises a high intensity spectral light source (LS).

15. The system of any one of claims 1 to 14, further comprising optical means (2-3 to 2-9) projecting a prescribed non-rectangular beam of spectral light from said energy-source means (XL, LS) to a prescribed input-locus, and a bundle (21, 21') of prescribed optical fibers having a prescribed entry-face (A) and a prescribed relatively rectangular exit-face (B), the entry face (A) being disposed to receive said beam of radiation at said input-locus, the exit-face (B) being arranged and adapted to so as to project said rectangular beam onto a said site, and the fibres being so arranged between said faces (A, B) as to randomize small discrete portions of said beam as received at said locus whereby to better distribute the radiation of each said portion relatively uniformly along said exit-face (B) of the bundle (21, 21').

16. The system of claim 15 wherein the source means (XL, LS) projects a relatively-circular beam and said entry-face (A) is relatively circular.

17. The system of claim 16 wherein said entry-face (A) has a diameter approximately equal to that of said beam when the beam is in sharpest-focus thereon.

18. The system of any one of claims 15 to 17 wherein said fibres are so randomized that a thin opaque probe may be overlaid at any point along said exit-face (B) so as to block all input-light thereto, and to produce, at said entry-face (A), only a random, separated array of tiny black-spots.

19. The system of any one of claims 15 to 18 wherein said fibres are so randomized that essentially any anomaly in the characteristics of the beam will be uniformly distributed along said exit-face (B).

20. The system of any one of claims 1 to 19, further comprising a single unit mount casting means (MC) adapted to be mounted straddling the document path (T-P) and providing coupling apertures for mounting said casting means to said transport means, said mounting casting means (MC) having coupling extensions (T-C, T-C', FC, P-C) for mounting and co-locating optical tower means (OT), said energy-source means (XL, LS) and said means (2-1, E-D) for extracting a substantial part of the infra-red (IR) light from said energy-source means (XL, LS).

21. The system of claim 20 wherein said transport means comprises document-imaging means; and the said mount-casting means (MC) provides isolation means for isolation thermally and optically from said imaging means.

22. The system of claim 20 or 21 wherein the energy-source means (XL, LS) comprises a single lamp (LS), and optical components (2-3, 2-5, 2-7, 2-7', 2-9, 2-9') disposed into a pair of like illumination arrays, in said optical tower means (OT) one for illuminating each side of the documents (DC) transported along said document path (T-P).

23. The system of claim 22, further comprising a pair of like camera means (CCPD, CCPD') mounted on said casting (MC) along with like respective imaging-path optical components.

24. The system of claim 22 or 23, wherein said optical components effect a first split of said radiation beam, and two other like sets of optical components each effect a second split of their illumination beam, whereby to provide a pair of like, oblique, symmetrical beams, on each side of each passing document.

25. The system of any one of claims 1 to 24, further comprising beam adjust/balance means comprising beam focus-means (2-9, 2-9') intercepting its beam and adapted to change its focal point, and a fiber-optic array (21, 21') exhibiting a relatively circular entry-aperture (A) of prescribed diameter (D_{c}) and an exit-face (B) configured to illuminate the respective site quite uniformly, the fibres of the array (21, 21') being arranged and distributed, in uniform random fashion completely across this exit-face, said beam focus means being arranged and adapted to vary the focal-point of its beam and so change beam-diameter at said entry-aperture (A) sufficient to spread its beam beyond the aperture and so controllably reduce the amount of the beam entering the array (21, 21').

26. The system of claim 25 wherein each said beam focus means (2-9, 2-9') comprises an adjustable-focus lens means.

27. The system of claim 26 wherein said lens means (2-9, 2-9') focus the beam on each array (21, 21') such that a shift in lens-focus reduces output light from the array (21, 21'), the two sites being thus matched in light-intensity by merely focus-adjusting these lenses (2-9, 2-9').

28. The system of any one of claims 1 to 27, wherein said energy source means (XL, LS) comprises a high intensity spectral light source (LS) at said sites each having illumination-beam projection means and an associated optical illumination path array and further includes camera means (CCPD, CCPD') having an associated optical image path array, said path array comprising photo-optic filter means (3-7) adapted to shift the light spectrum of said spectral light source (LS) in the direction of optimum human-eye response, and said camera means (CCPD, CCPD') being selected to exhibit a spectral response close to that of the human-eye response.

29. The system of claim 28 wherein each said camera means (CCPD, CCPD') comprises a charge-coupled photo-diode means.

30. The system of claim 28 or 29 wherein a pair of like illumination path arrays are provided, one for front illumination, and one for rear illumination.

31. The system of claim 30 wherein each said illumination path array conducts one of the beams so as to split to a respective front or rear side of the documents, and further splits its illumination beam into two like sub-beams being directed to focus at a prescribed point, but being disposed at opposing, equal angles about this point.

32. The system of claim 31 wherein each of the sub-beam pairs are offset about ± 30° from the normal to the documents (DC).

## Patentansprüche

1. Dokumenten-Verarbeitungssystem, in welchem Dokumente mit hoher Geschwindigkeit entlang eines vorgeschriebenen Transportpfades (T-P) an zwei versetzten Bilderfassungsstationen vorbei zu transportieren sind, wobei dieses System umfaßt:
Transporteinrichtungen (BL, BL') zum kontinuierlichen Transportieren von Dokumenten (DC) an den Stationen vorbei mit hoher Geschwindigkeit und ohne Pause; eine Energiequelle (XL, LS) zum Abgeben eines Lichtenergie-Strahles und zum parallelen Richten der Lichtenergie auf beide Stationen;
eine Energie-Transporteinrichtung (21, 21') zwischen der Energiequelle (XL, LS) und den Stationen;
zwei Bilderfassungseinrichtungen (CCPD, CCPD'), wobei eine an jeder der Stationen angeordnet ist, wobei jede ein Bild des Dokumentes (DC) erfaßt; und eine Wärme-Dissipations-Einrichtung (2-1, ED), welche im Betrieb der Energiequelle (XL, LS) benachbart angeordnet ist und derart wirkt, daß sie Lichtenergie davon extrahiert und sie dissipiert, um die Stationen und die Transporteinrichtung (21, 21') von nachteiligen Lichtwirkungen abzuschirmen;
dadurch gekennzeichnet, daß
die Wärme-Dissipationseinrichtung eine Einrichtung (2-1) zum Extrahieren von wenigstens einem wesentlichen Teil der Infrarot-(lR)-Komponente des von der Energiequelle (XL, LS) emittierten Lichtenergie-Strahles beinhaltet und einen Dissipations-Sumpf (E-D), welcher ausgebildet ist zum Aufnehmen der IR-Komponente von der Extraktionseinrichtung (2-1) und um sie in Wärme umzuwandeln.

2. System nach Anspruch 1,
bei welchem die Transporteinrichtungen (BL, BL') im wesentlichen identisch sind, wobei jede so ausgebildet ist, daß sie an einer Seite jedes Dokumentes (DC) arbeitet, wenn es eine entsprechende der Stationen passiert.

3. System nach Anspruch 2,
bei welchem jede Station ausgebildet ist zur Verwendung an einer entsprechenden Vorder- und Rückseite eines durchlaufenden Dokumentes (DC).

4. System nach Anspruch 3,
bei welchem die Stationen glasgefüllte Schlitze (SL) umfassen, welche so bemessen sind, daß sie auf die vorgesehenen Datenteile der Dokumente (DC) wirken.

5. System nach einem der Ansprüche 1 bis 4,
bei welchem die Wärme-Dissipations-Einrichtung eine selektiv betreibbare Blende (Sh) beinhaltet, zum Richten der gesamten, von der Energiequelle (XL, LS) abgestrahlten Energie zu dem Dissipations-Sumpf (E-D).

6. System nach einem der Ansprüche 1 bis 5,
bei welchem der Dissipations-Sumpf (E-D) eine gerippte, luftgekühlte Wärmefalle (V_{V}, V_{L}) beinhaltet.

7. System nach Anspruch 6,
bei welchem der Dissipations-Sumpf (E-D) eine Oberflächeneinrichtung (V_{V}, V_{L}) in einer Umschließungseinrichtung (SP) beinhaltet, welche ausgebildet ist, um die IR-Komponente der Lichtenergie aufzunehmen und einseitig in Oberflächenwärme umzuwandeln, wobei die Oberflächeneinrichtung (V_{V}, V_{L}) in einer IR-Fallen-Konfiguration angeordnet ist, um die IR-Komponente von einem Eingangsabschnitt aufzunehmen, welcher einer kleinen, wenn überhaupt, IR-Komponente erlaubt, davon zu entkommen.

8. System nach Anspruch 7,
bei welchem die Oberflächeneinrichtung (V_{V}, V_{L}) zwei gegenüberliegende Flügel-Sätze (V_{V}, V_{L}) umfaßt, wobei die Sätze schräg und symmetrisch zu der Mittellinie des IR-Eintritts angeordnet sind, wobei jeder Satz eine Anzahl gleicher "Schwarz-Körper"-Flügel (V_{V}, V_{L}) umfaßt, welche parallel und äquidistant angeordnet sind, während sie sich überlappen, um eine Hälfte einer konvergierenden, geschlossenen IR-Eintrittskammer (SP) zu bilden.

9. System nach Anspruch 7 oder 8,
bei welchem eine Absaugeinrichtung (FN) an einem offenen Ende dieser Umschließungs-Einrichtung (SP) gegenüber dem IR-Eintrittsabschnitt angeordnet ist, wobei die Absaug-Einrichtung (FN) so ausgebildet und angeordnet ist, daß sie Umgebungsluft schnell in ein Ende der Umschließungs-Einrichtung (SP) zieht und sie an dem anderen Ende ausstößt und sie hinter die meisten oder sämtliche Oberflächen-Flügel (V_{V}, V_{L}) zieht.

10. System nach einem der Ansprüche 1 bis 9,
bei welchem die Extraktionseinrichtung (2-1) eine selektive Reflektoreinrichtung ist, welche über dem Lichtenergie-Strahlenpfad angeordnet und so ausgebildet ist, daß sie nur die IR-Komponente zu dem Dissipations-Sumpf (E-D) umlenkt.

11. System nach Anspruch 10,
bei welchem die selektive Reflexionseinrichtung (2-1) ein "heißer Spiegel" ist.

12. System nach Anspruch 10 oder 11 und abhängig von Anspruch 5,
wobei die Blende (Sh) im Betrieb der selektiven Reflektoreinrichtung (2-1) benachbart angeordnet ist und derart angeordnet und ausgebildet ist, daß sie selektiv automatisch eingefügt wird, um den gesamten Strahl abzuschirmen und zu dem Dissipations-Sumpf (E-D) umzulenken.

13. System nach Anspruch 10,
bei welchem eine zweite Reflektoreinrichtung (Sh) im Betrieb der Energiequelle (XL, LS) benachbart angeordnet ist und derart angeordnet und ausgebildet ist, daß sie zu vorgeschriebenen "Notfall-Zeiten" automatisch in die Gesamtstrahl-Abfang-Position geschoben wird, wodurch der gesamte Quellen-Strahl zu Dissipations-Sumpf (E-D) umgelenkt wird.

14. System nach einem der Ansprüche 1 bis 13,
bei welchem die Energiequelle (XL, LS) eine hochintensive Spektral-Lichtquelle (LS) umfaßt.

15. System nach einem der Ansprüche 1 bis 14,
mit einer optischen Einrichtung (2-3 bis 2-9), welche einen vorgeschriebenen, nicht-rechtwinkligen Strahl spektralen Lichtes von der Energiequelle (XL, LS) zu einer vorgeschriebenen Eingangs-Position projiziert und ein Bündel (21, 21') vorgeschriebener optischer Fasern weist eine vorgeschriebene Eintrittsfläche (A) und eine vorgeschriebene, relativ rechtwinklige Austrittsfläche (B) auf, wobei die Eintrittsfläche (A) angeordnet ist, um den Strahl an der Eingangsposition aufzunehmen, die Austrittsfläche (B) angeordnet und ausgebildet ist, um den rechtwinkligen Strahl zu einer der Stationen zu projizieren und die Fasern derart zwischen den Oberflächen (A, B) angeordnet sind, daß sie kleine, diskrete Teile des Strahls, wie er an der Position aufgenommen wurde, zufällig verteilt, wodurch die Strahlung jedes Teiles relativ einheitlich entlang der Austrittsfläche (B) des Bündels (21, 21') besser verteilt wird.

16. System nach Anspruch 15,
bei welchem die Quelle (XL, LS) einen relativ runden Strahl projiziert und die Eintrittsfläche (A) relativ rund ist.

17. System nach Anspruch 16,
bei welchem die Eintrittsfläche (A) einen Durchmesser aufweist, der annähernd gleich demjenigen des Strahles ist, wenn der Strahl am schärfsten darauf fokussiert ist.

18. System nach einem der Ansprüche 15 bis 17,
bei welchem die Fasern derart zufällig verteilt sind, daß eine dünne, lichtundurchlässige Sonde an jedem Punkt entlang der Austrittsfläche (B) überlagert werden kann, um sämtliches derart einfallendes Licht abzuschirmen, und um an der Eintrittsfläche (A) nur eine zufällige, separate Matrix aus kleinen schwarzen Punkten zu erzeugen.

19. System nach einem der Ansprüche 15 bis 18,
bei welchem die Fasern derart zufällig verteilt sind, daß jede Anomalie in den Kennzeichen des Strahles im wesentlichen gleichförmig entlang der Austrittsfläche (B) verteilt wird.

20. System nach einem der Ansprüche 1 bis 19,
mit einem einzelnen Einheiten-Montage-Gußstück (MC), welches so ausgebildet ist, daß es auf dem Dokumentenpfad (T-P) aufsitzend angebracht ist und Kupplungs-Öffnungen zum Anbringen der Guß-Einrichtung an der Transporteinrichtung bereitstellt, wobei das Montage-Gußstück (MC) Kupplungs-Verlängerungen (T-C, T-C', FC, P-C) zum Anbringen und nebeneinander Anordnen des optischen Turmes (OT), der Energiequelle (XL, LS) und der Einrichtung (2-1, E-D) zum Extrahieren eines wesentlichen Teiles des infraroten (IR)-Lichtes von der Energiequelle (XL, LS) aufweist.

21. System nach Anspruch 20,
bei welchem die Transporteinrichtung eine Dokumenten-Abbildungseinrichtung umfaßt und wobei das Montage-Gußstück (MC) eine Isolationseinrichtung zur thermischen und optischen Isolation von der Abbildungs-Einrichtung aufweist.

22. System nach Anspruch 20 oder 21,
bei welchem die Energiequelle (XL, LS) eine einzelne Lampe (LS) und optische Komponenten (2-3, 2-5, 2-7, 2-7', 2-9, 2-9') umfaßt, welche in zwei gleichartigen Beleuchtungs-Matritzen in dem optischen Turm (OT) angeordnet sind, einer zum Beleuchten jeder Seite der Dokumente (DC), welche entlang des Dokumentenpfades (T-P) transportiert werden.

23. System nach Anspruch 22,
mit zwei gleichartigen Kamera-Einrichtungen (CCPD, CCPD'), welche auf dem Gußstück (MC) zusammen mit den entsprechenden optischen Abbildungspfad-Komponenten angebracht sind.

24. System nach Anspruch 22 oder 23,
bei welchem die optischen Komponenten eine erste Aufteilung des Strahles bewirken und zwei andere gleiche Sätze optischer Komponenten jeweils eine zweite Aufteilung ihrer Beleuchtungsstrahlen bewirken, wodurch zwei gleiche, schräge, symmetrische Strahlen an jeder Seite jedes durchlaufenden Dokumentes bereitgestellt werden.

25. System nach einem der Ansprüche 1 bis 24,
mit einer Strahl-Einstell/Ausgleichs-Einrichtung mit einer Strahl-Fokussierungseinrichtung (2-9, 2-9'), welche ihren Strahl abfängt und so ausgebildet ist, daß sie ihren Brennpunkt ändert, und einer faseroptischen Matrix (21, 21'), welche eine relativ runde Eintrittsöffnung (A) eines vorgeschriebenen Durchmessers (D_{c}) und eine Austrittsfläche (B) aufweist, welche so ausgebildet ist, um die entsprechende Station gleichförmig zu beleuchten, wobei die Fasern der Matrix (21, 21') in einer gleichförmigen, zufälligen Weise vollständig über diese Austrittsfläche angeordnet und verteilt sind, wobei die Strahlen-Fokussierungseinrichtung angeordnet und derart ausgebildet ist, den Brennpunkt ihrer Strahlen zu variieren und so den Strahldurchmesser an der Eintritts-Öffnung (A) ausreichend ändert, um ihren Strahl hinter der Offnung aufzuspreizen und so einstellbar die Menge des in die Matrix (21, 21') eintretenden Strahles zu verringern.

26. System nach Anspruch 25,
bei welchem jede der Fokussierungseinrichtungen (2-9, 2-9') eine Linseneinrichtung mit einstellbarer Fokussierung umfaßt.

27. System nach Anspruch 26,
bei welchem die Linseneinrichtung (2-9, 2-9') den Strahl auf jede der Matritzen (21, 21') derart fokussiert, daß eine Verschiebung der Linsen-Fokussierung das abgegebene Licht von der Matrix (21, 21') verringert, wobei die zwei Stationen in der Lichtintensität übereinstimmen durch lediglich eine Fokus-Einstellung dieser Linsen (2-9, 2-9').

28. System nach einem der Ansprüche 1 bis 27,
bei welchem die Energiequelle (XL, LS) eine hochintensive, Spektral-Lichtquelle (LS) an den Stationen umfaßt, wobei jede eine Beleuchtungsstrahl-Projektionseinrichtung und eine zugeordnete optische Beleuchtungs-Pfad-Matrix aufweist und weiterhin eine Kamera (CCPD, CCPD') mit einer zugeordneten optischen Bild-Pfad-Matrix beinhaltet, wobei die Pfad-Matrix eine photo-optische Filtereinrichtung (3-7) umfaßt, welche ausgebildet ist, um das Licht-Spektrum der Spektral-Lichtquelle (LS) in der Richtung der optimalen Reaktion des menschlichen Auges zu verschieben, und wobei die Kameraeinrichtung (CCPD, CCPD') ausgewählt ist, um eine spektrale Reaktion nahe derjenigen der Reaktion des menschlichen Auges zu zeigen.

29. System nach Anspruch 28,
bei welchem die Kameraeinrichtung (CCPD, CCPD') eine ladungsgekoppelte Photodiode umfaßt.

30. System nach Anspruch 28 oder 29,
bei welchem zwei gleichartige Beleuchtungspfad-Matritzen vorgesehen sind, eine zur vorderen Beleuchtung und eine zur hinteren Beleuchtung.

31. System nach Anspruch 30,
bei welchem die Beleuchtungspfad-Matrix einen der Strahlen leitet, um ihn für entsprechende Vorder- und Rückseiten des Dokumentes aufzuteilen und weiterhin ihren Beleuchtungsstrahl in zwei gleichartige Teilstrahlen aufteilt, welche zur Fokussierung auf einen vorgeschriebenen Punkt gerichtet werden, aber an gegenüberliegenden gleichen Winkeln um diesen Punkt herum angeordnet sind.

32. System nach Anspruch 31,
bei welchem jedes der Teilstrahlen-Paare um ± 30° gegenüber der Normalen der Dokumente (DC) versetzt sind.

## Revendications

1. Système de traitement de documents dans lequel des documents doivent être transportés à haute vitesse le long d'un chemin de transport prédéterminé (T-P) au-delà d'un couple de sites décalés de capture d'image, ce système comprenant :
des moyens d'acheminement (BL, BL') pour acheminer des documents (Dc) de façon continue à haute vitesse et sans pause au-delà desdits sites ;
des moyens formant source d'énergie (XL, LS) pour émettre un faisceau d'énergie lumineuse et pour diriger l'énergie lumineuse au niveau des deux sites, de façon parallèle ;
des moyens de transport d'énergie (21, 21') entre ladite source d'énergie (XL, LS) et les sites ;
deux moyens de capture d'image (CCPD, CCPD'), un moyen étant disposé au niveau de chacun desdits sites, chaque moyen agissant pour capturer une image desdits documents (DC) ; et des moyens de dissipation de chaleur (2-1, E-D) disposés, de façon opérationnelle, à côté desdits moyens formant source d'énergie (XL, LS) et agissant pour extraire l'énergie lumineuse de ces derniers et pour la dissiper de façon à protéger lesdits sites et lesdits moyens de transport d'énergie (21, 21') des effets nuisibles de la lumière ;
caractérisé en ce que
les moyens de dissipation de chaleur comprennent des moyens (2-1) pour extraire au moins une partie importante de la composante infrarouge (IR) du faisceau d'énergie lumineuse émis par lesdits moyens formant source d'énergie (XL, LS), et des moyens de vidage-dissipation d'IR (E-D) conçus pour recevoir la composante IR en provenance desdits moyens d'extraction (2-1) et pour la transformer en chaleur.

2. Système selon la revendication 1 dans lequel lesdits moyens d'acheminement (BL, BL') sont sensiblement identiques, chacun étant conçu pour fonctionner sur un côté particulier de chaque document (DC) quand il passe par un site respectif desdits sites.

3. Système selon la revendication 2, dans lequel chaque site est conçu pour être utilisé sur un côté avant et arrière d'un document qui passe (DC).

4. Système selon la revendication 3, dans lequel lesdits sites comprennent des fentes remplies de verre (SL) dimensionnées pour agir sur les parties concernées de données des documents (DC).

5. Système selon l'une quelconque des revendications 1 à 4, dans lequel les moyens de dissipation de chaleur comprennent des moyens formant obturateur pouvant être mis en oeuvre de manière sélective (Sh) pour diriger toute l'énergie projetée à partir des moyens formant source d'énergie (XL, LS) vers lesdits moyens de vidage-dissipation (E-D).

6. Système selon l'une quelconque des revendications 1 à 5, dans lequel les moyens de vidage-dissipation (E-D) comprennent un piège de chaleur refroidi par air, à ailettes (V_{V}, V_{L}).

7. Système selon la revendication 6, dans lequel lesdits moyens de vidage-dissipation (E-D) comprennent des moyens de surface (V_{V}, V_{L}) dans des moyens formant enceinte (SP), conçus pour recevoir la composante IR de l'énergie lumineuse et pour la transformer, de façon unilatérale, en chaleur de surface, lesdits moyens de surface (V_{V}, V_{L}) étant agencés dans une conformation de piégeage d'IR pour recevoir la composante IR en provenance d'une partie d'entrée permettant à un petit peu, s'il y a lieu, de la composante IR d'émerger de cette dernière.

8. Système selon la revendication 7, dans lequel les moyens de surface (V_{V}, V_{L}) comprennent un couple de jeux opposés d'ailettes (V_{V}, V_{L}), les jeux étant disposés de façon oblique et de manière symétrique autour de la ligne centrale de l'entrée IR, chaque jeu comprenant un certain nombre d'ailettes semblables formant "corps noir" (V_{V}, V_{L}) agencées parallèlement et de façon équidistante, tout en se chevauchant, pour former une moitié d'une chambre d'entrée IR fermée convergente (SP).

9. Système selon la revendication 7 ou 8, dans lequel des moyens d'évacuation (FN) sont disposés au niveau d'une extrémité ouverte de ces moyens formant enceinte (SP), opposés à la partie d'entrée IR, les moyens d'évacuation (FN) étant conçus et agencés pour aspirer l'air ambiant rapidement par une extrémité particulière des moyens formant enceinte (SP) et pour l'expulser au niveau de l'autre extrémité, le faisant passer par la plupart, ou la totalité, desdites ailettes formant moyens de surface (V_{V}, V_{L}).

10. Système selon l'une quelconque des revendications 1 à 9, dans lequel lesdits moyens d'extraction (2-1) sont des moyens formant réflecteur sélectif interposés sur le chemin de faisceau d'énergie lumineuse et conçus pour détourner seulement la composante IR vers lesdits moyens de vidage-dissipation (E-D).

11. Système selon la revendication 10 dans lequel lesdits moyens formant réflecteur sélectif (2-1) sont constitués par un "miroir chaud".

12. Système selon la revendication 10 ou 11 quand elle dépend de la revendication 5, dans lequel lesdits moyens formant obturateur (Sh) sont disposés de façon opérationnelle à côté des moyens formant réflecteur sélectif (2-1), agencés et conçus pour être interposés de façon automatique et de manière sélective pour bloquer la totalité du faisceau et pour le détourner vers lesdits moyens de vidage-dissipation (E-D).

13. Système selon la revendication 10, dans lequel des seconds moyens formant réflecteur (Sh) sont disposés de façon opérationnelle à côté des moyens formant source d'énergie (XL, LS), agencés et conçus pour être décalés de façon automatique dans la position d'interception du faisceau complet à des "Instants d'Urgence" prédéterminés de façon à détourner la totalité du faisceau de rayonnement de source vers lesdits moyens de vidage-dissipation (E-D).

14. Système selon l'une quelconque des revendications 1 à 13, dans lequel lesdits moyens formant source d'énergie (XL, LS) comprennent une source de lumière spectrale à haute intensité (LS).

15. Système selon l'une quelconque des revendications 1 à 14, comprenant, de plus, des moyens optiques (2-3 à 2-9) projetant un faisceau non rectangulaire prédéterminé de lumière spectrale à partir desdits moyens formant source d'énergie (XL, LS) vers un lieu géométrique d'entrée prédéterminé, et un faisceau (21, 21') de fibres optiques prédéterminées ayant une face d'entrée prédéterminée (A) et une face de sortie relativement rectangulaire (B), la face d'entrée (A) étant disposée pour recevoir ledit faisceau de rayonnement au niveau dudit lieu géométrique d'entrée, la face de sortie (B) étant agencée et conçue de façon à projeter ledit faisceau rectangulaire sur un dit site, et les fibres étant agencées entre lesdites faces (A, B) de façon à randomiser des petites parties discrètes dudit faisceau quand il est reçu au niveau dudit lieu géométrique de façon à mieux répartir le rayonnement de chaque dite partie de façon relativement uniforme le long de ladite face de sortie (B) du faisceau (21, 21').

16. Système selon la revendication 15, dans lequel les moyens formant source d'énergie (XL, LS) projettent un faisceau relativement circulaire et dans lequel ladite face d'entrée (A) est relativement circulaire.

17. Système selon la revendication 16, dans lequel ladite face d'entrée (A) a un diamètre à peu près égal à celui dudit faisceau lorsque le faisceau est concentré de la façon la plus nette sur cette dernière.

18. Système selon l'une quelconque des revendications précédentes 15 à 17, dans lequel lesdites fibres sont randomisées de sorte qu'une fine sonde opaque peut être couchée au niveau d'un quelconque point le long de ladite face de sortie (B) de façon à bloquer toute la lumière d'entrée sur cette dernière, et de façon à produire, au niveau de ladite face d'entrée (A), seulement une matrice séparée aléatoire de minuscules points noirs.

19. Système selon l'une quelconque des revendications 15 à 18, dans lequel lesdites fibres sont randomisées de sorte que sensiblement toute anomalie dans les caractéristiques du faisceau va être répartie de façon uniforme le long de ladite face de sortie (B).

20. Système selon l'une quelconque des revendications 1 à 19, comprenant, de plus, des moyens de montage moulés (MC) formant une simple unité conçus pour être montés à califourchon sur le chemin de document (T-P) et possédant des ouvertures de couplage pour monter lesdits moyens moulés sur lesdits moyens de transport, lesdits moyens de montage moulés (MC) ayant des parties en saillie de couplage (T-C, T-C', FC, P-C) pour monter et positionner conjointement des moyens formant tourelle optique (OT), lesdits moyens formant source d'énergie (XL, LS) et lesdits moyens (2-1, E-D) pour extraire une partie importante de la lumière infrarouge (IR) en provenance desdits moyens formant source d'énergie (XL, LS).

21. Système selon la revendication 20, dans lequel lesdits moyens de transport comprennent des moyens d'imagerie de document ; et lesdits moyens de montage moulés (MC) procurent des moyens d'isolement pour une isolation thermique et optique contre lesdits moyens d'imagerie.

22. Système selon la revendication 20 ou 21, dans lequel les moyens formant source d'énergie (XL, LS) comprennent une lampe unique (LS), et des composants optiques (2-3, 2-5, 2-7, 2-7', 2-9, 2-9') disposés en un couple de matrices d'éclairage semblables, dans lesdits moyens formant tourelle optique (OT), une pour éclairer chaque côté des documents (DC) transportés le long dudit chemin de document (T-P).

23. Système selon la revendication 22, comprenant, de plus, un couple de moyens formant appareils semblables de prise de vues (CCPD, CCPD') montés sur lesdits moyens moulés (MC) en même temps que des composants optiques de chemin d'imagerie respectifs semblables.

24. Système selon la revendication 22 ou 23, dans lequel lesdits composants optiques effectuent une première division dudit faisceau de rayonnement, et deux autres ensembles semblables de composants optiques effectuent chacun une seconde division de leur faisceau d'éclairage, de façon à donner un couple de faisceaux symétriques, obliques, semblables de chaque côté du document qui passe.

25. Système selon l'une quelconque des revendications 1 à 24, comprenant, de plus, des moyens de réglage/équilibrage de faisceau comprenant des moyens de concentration de faisceau (2-9, 2-9') interceptant son faisceau et conçu pour modifier son point focal, et un groupement de fibres optiques (21, 21') présentant une ouverture d'entrée relativement circulaire (A) de diamètre prédéterminé (D_{c}) et une face de sortie (B) conformée pour éclairer le site respectif de manière tout à fait uniforme, les fibres du groupement (21, 21') étant agencées et réparties, de manière uniformément aléatoire, complètement sur cette face de sortie, lesdits moyens de concentration de faisceau étant agencés et conçus pour varier le point focal de son faisceau et ainsi pour modifier le diamètre de faisceau au niveau de ladite ouverture d'entrée (A) suffisamment pour étaler son faisceau au-delà de l'ouverture et pour réduire ainsi la quantité du faisceau pénétrant dans le groupement (21, 21').

26. Système selon la revendication 25, dans lequel chacun desdits moyens de concentration de faisceau (2-9, 2-9') comprend des moyens formant lentille à foyer réglable.

27. Système selon la revendication 26, dans lequel lesdits moyens formant lentille (2-9, 2-9') concentrent le faisceau sur chaque groupement (21, 21') de sorte qu'un décalage de foyer de lentille réduit la lumière de sortie en provenance du groupement (21, 21'), les deux sites étant ainsi accordés en ce qui concerne l'intensité lumineuse en réglant purement et simplement le foyer de ces lentilles (2-9, 2-9').

28. Système selon l'une quelconque des revendications 1 à 27, dans lequel lesdits moyens formant source d'énergie (XL, LS) comprennent une source de lumière spectrale à haute intensité (LS) au niveau desdits sites, chacun ayant des moyens de projection de faisceau d'éclairage et un groupement de chemins d'éclairage optique associé et comprennent, de plus, des moyens formant appareil de prise de vues (CCPD, CCPD') ayant un groupement de chemins d'image optique associé, ledit groupement de chemins comprenant des moyens formant filtre photo-optique (3-7) conçus pour décaler le spectre de lumière de ladite source de lumière spectrale (LS) dans le sens d'une réponse optimale de l'oeil humain, et lesdits moyens formant appareil de prise de vues (CCPD, CCPD') étant sélectionnés pour présenter une réponse spectrale proche de celle de la réponse de l'oeil humain.

29. Système selon la revendication 28, dans lequel chacun desdits moyens formant appareil de prise de vues (CCPD, CCPD') comprend des moyens formant photodiodes à couplage de charges.

30. Système selon la revendication 28 ou 29, dans lequel un couple de groupements de chemins d'éclairage est prévu, un pour l'éclairage avant et un pour l'éclairage arrière.

31. Système selon la revendication 30, dans lequel chacun desdits groupements de chemins d'éclairage conduit un des faisceaux de façon à le diviser sur un côté avant ou arrière respectif des documents, et divise davantage son faisceau d'éclairage en deux faisceaux secondaires semblables, étant dirigés pour se concentrer au niveau d'un point prédéterminé, mais étant disposés à des angles égaux opposés autour de ce point.

32. Système selon la revendication 31, dans lequel chacun des couples de faisceaux secondaires est décalé d'environ ±30° par rapport à la perpendiculaire des documents (DC).
